# EUROPEAN PATENT SPECIFICATION

(11) **EP 3 399 686 B1**
(45) Date of publication and mention of the grant of the patent: **07.12.2022**
(21) Application number: 16881259.2
(22) Date of filing: 29.12.2016
(51) Int. Cl.: H04L 5/00, H04L 5/14, H04L 27/26

(54) **SYNCHRONIZATION SIGNAL TRANSMISSION METHOD, DEVICE, AND SYSTEM**
VERFAHREN, VORRICHTUNG UND SYSTEM ZUR SYNCHRONISATIONSSIGNALÜBERTRAGUNG
SYSTÈME, DISPOSITIF ET PROCÉDÉ D'ÉMISSION DE SIGNAL DE SYNCHRONISATION

(30) Priority: 31.12.2015 CN 201511033382
(43) Date of publication of application: 07.11.2018
(73) Proprietor: ZTE Corporation, Shenzhen, Guangdong 518057 (CN)
(72) Inventor: LIANG, Chunli, Shenzhen, Guangdong 518057 (CN); DAI, Bo, Shenzhen, Guangdong 518057 (CN); XIA, Shuqiang, Shenzhen, Guangdong 518057 (CN); FANG, Huiying, Shenzhen, Guangdong 518057 (CN)
(74) Representative: Studio Torta S.p.A.
(86) International application number: PCT/CN2016/113055
(87) International publication number: WO 2017/114470

(56) References cited:
- WO-A1-2014/178664
- WO-A1-2014/178946
- CN-A- 105 122 715
- CN-A- 105 207 754
- US-A1- 2011 002 430
- US-A1- 2013 201 975
- US-A1- 2013 235 851
- US-A1- 2013 308 555
- US-A1- 2014 050 206
- US-A1- 2015 296 518
- US-B2- 9 020 051

## Description

### TECHNICAL FIELD

The present disclosure relates to the communication field, and particularly, to a synchronization signal transmission method, device and system.

### BACKGROUND

Machine Type Communication (MTC) User Equipment (user terminal), also known as Machine to Machine (M2M) user communication equipment, is currently the main application form of the Internet of Things. Several technologies that are applicable for Cellular Internet of Things (C-IOT) are disclosed in the 3rd Generation Partnership Project (3GPP) technical report TR45.820V200. The narrowband LTE (NB-LTE) technology is most noticeable. The system's bandwidth is 200 kHz, which is the same as the channel bandwidth of the Global System for Mobile Communication (GSM). This brings conveniences for the NB-LTE system to reuse the GSM spectrum and reduce the mutual interference between channels adjacent to GSM channels. The transmission bandwidth and downlink subcarrier spacing (or interval) of NB-LTE are 180 kHz and 15 kHz, respectively, which are the same as the bandwidth and subcarrier spacing of one Physical Resource Block (PRB) of the Long-Term Evolution (LTE) system, respectively.

For a communication system, the design of synchronization channels and broadcast channels is particularly important. For the above narrowband system, the designs of the Primary Synchronization Signal (PSS), the Secondary Synchronization Signal (SSS) and the Physical Broadcast Channel (P-BCH) occupying six PRBs in the existing LTE are no longer applicable and it is needed to redesign PSS/SSS and PBCH.

Related arts do not propose effective solutions to the problem in the narrowband system of LTE that the designs of the synchronization signal and the physical broadcast channel are not unreasonable.

This section provides background information related to the present disclosure which is not necessarily prior art.

US 2014/050206 A1 teaches a method for transmitting a synchronization signal in a carrier aggregation system. The synchronization signal is variably set by means of the synchronization signal setting information.

US 9020051 B2 teaches that the physical broadcast channel is transmitted on a PBCH subframe, and the synchronization signal (including PSS and SSS) is transmitted on synchronization signal subframe or a PSS/SSS subframe.

US 2013/308555 A1 teaches a method for scrambling sequence initialization for downlink demodulation reference signal.

US 2013/201975 A1 teaches a DMRS-based transmission method for avoiding collision with primary synchronization signal, secondary synchronization signal or physical broadcast channel.

US 2015/296518 A1 teaches a method for transmitting/receiving data in a wireless communication system.

WO 2014/178664 A1 teaches a method for transmitting synchronization channel and cell search signal in wireless communication system.

US 2011/002430 A1 teaches that multiple synchronization transmissions are sent in a frame with non-uniform spacing.

US 2013235851 A1 teaches methods and apparatus to transmit and receive synchronization signals in a mobile communication system.

### SUMMARY

The present invention relates to a synchronization signal transmission method, a synchronization signal transmission device, and a synchronization signal transmission system as defined in the annexed claims.

Embodiments of the present disclosure provide a synchronization signal transmission method, device and system, in order to at least solve the problem in related arts that, in the narrowband system of LTE, the designs of the synchronization signal and the physical broadcast channel are not unreasonable.

According to an aspect of embodiments of the present disclosure, there is provided a synchronization signal transmission method, according to claim 1.

According to another aspect of embodiments of the preset disclosure, there is provided a synchronization signal transmission device, according to claim 3.

According to another aspect of embodiments of the present disclosure, there is provided a synchronization signal transmission system, according to claim 4.

In embodiments of the present disclosure, the base station periodically transmits a synchronization signal and a Physical Broadcast Channel PBCH to a terminal according to a preset transmission subframe pattern, the synchronization signal includes a primary synchronization signal PSS and a secondary synchronization signal SSS, and the transmission subframe pattern indicates a position of a transmission subframe for transmitting the synchronization signal and the PBCH in a plurality of radio frames within a predetermined period of time. The present disclosure can solve the problem in the narrowband system of LTE that the designs of the synchronization signal and the physical broadcast channel are not unreasonable, thus realizing reasonable transmission of the synchronization signal and the physical broadcast channel in the narrowband system.

This section provides a summary of various implementations or examples of the technology described in the disclosure, and is not a comprehensive disclosure of the full scope or all features of the disclosed technology.

### BRIEF DESCRIPTION OF THE DRAWINGS

The drawings described herein are given to provide a further understanding of the present disclosure, and constitute a part of the present application. The exemplary embodiments of the present disclosure and descriptions thereof are used to explain the present disclosure, and are not intended to unduly limit the present disclosure. In the drawings:
Fig. 1 is a flowchart of a synchronization signal transmission method according to an embodiment of the present disclosure.
Fig. 2 is a block diagram of a synchronization signal transmission device according to an embodiment of the present disclosure.
Fig. 3 is a schematic diagram of seven uplink and downlink configurations in a TDD system according to an exemplary implementation of the present disclosure.
Fig. 4 is a schematic diagram illustrating positions of transmission subframes of PSS, SSS, and PBCH according to a first exemplary implementation of the present disclosure.
Fig. 5 is a schematic diagram illustrating positions of transmission subframes of PSS, SSS, and PBCH according to a second exemplary implementation of the present disclosure.
Fig. 6 is a schematic diagram illustrating positions of transmission subframes of PSS, SSS, and PBCH according to a third exemplary implementation of the present disclosure.
Fig. 7 is a schematic diagram illustrating positions of transmission subframes of PSS, SSS, and PBCH according to a fourth exemplary implementation of the present disclosure.
Fig. 8 is a schematic diagram illustrating positions of transmission subframes of PSS, SSS, and PBCH according to a fifth exemplary implementation of the present disclosure.
Fig. 9 is a schematic diagram illustrating positions of transmission subframes of PSS, SSS, and PBCH according to a sixth exemplary implementation of the present disclosure.
Fig. 10 is a schematic diagram illustrating positions of transmission subframes of PSS, SSS, and PBCH according to a seventh exemplary implementation of the present disclosure.
Fig. 11 is a schematic diagram illustrating positions of transmission subframes of PSS, SSS, and PBCH according to an eighth exemplary implementation of the present disclosure.
Fig. 12 is a schematic diagram illustrating positions of transmission subframes of PSS, SSS, and PBCH according to a ninth exemplary implementation of the present disclosure.
Fig. 13 is a schcmatic diagram illustrating positions of transmission subframes of PSS, SSS, and PBCH according to a tenth exemplary implementation of the present disclosure.
Fig. 14 is a schematic diagram illustrating positions of transmission subframes of PSS, SSS, and PBCH according to an eleventh exemplary implementation of the present disclosure.
Fig. 15 is a schematic diagram illustrating positions of transmission subframes of PSS, SSS, and PBCH according to a twelfth exemplary implementation of the present disclosure.
Fig. 16 is a schematic diagram illustrating positions of transmission subframes of PSS, SSS, and PBCH according to a thirteenth exemplary implementation of the present disclosure.
Fig. 17 is a schematic diagram illustrating positions of transmission subframes of PSS, SSS, and PBCH according to a fourteenth exemplary implementation of the present disclosure.
Fig. 18 is a schematic diagram illustrating positions of transmission subframes of PSS, SSS, and PBCH according to a fifteenth exemplary implementation of the present disclosure.
Fig. 19 is a schematic diagram illustrating positions of transmission subframes of PSS, SSS, and PBCH according to a sixteenth exemplary implementation of the present disclosure.
Fig. 20 is a schematic diagram illustrating a first transmission situation for sending the PSS in a special subframe according to an exemplary implementation of the present disclosure.
Fig. 21 is a schematic diagram illustrating a second transmission situation for sending the PSS in a special subframe according to an exemplary implementation of the present disclosure.
Fig. 22 is a schematic diagram illustrating a third transmission situation for sending the PSS in a special subframe according to an exemplary implementation of the present disclosure.
Fig. 23 is a schcmatic diagram illustrating a first transmission situation for sending the SSS in a special subframe according to an exemplary implementation of the present disclosure.
Fig. 24 is a schematic diagram illustrating a second transmission situation for sending the PSS in a normal subframe according to an exemplary implementation of the present disclosure.
Fig. 25 is a schematic diagram illustrating a third transmission situation for sending the PSS in a normal subframe according to an exemplary implementation of the present disclosure.
Fig. 26 is a schematic diagram illustrating a first transmission situation for sending the SSS in a normal subframe according to an exemplary implementation of the present disclosure.
Fig. 27 is a schcmatic diagram illustrating positions of transmission subframes of PSS, SSS, and PBCH according to a seventeenth exemplary implementation of the present disclosure.
Fig. 28 is a schematic diagram illustrating positions of transmission subframes of PSS, SSS, and PBCH according to an eighteenth exemplary implementation of the present disclosure.
Fig. 29 is a schematic diagram illustrating positions of transmission subframes of PSS, SSS, and PBCH according to a nineteenth exemplary implementation of the present disclosure.
Fig. 30 is a schematic diagram illustrating positions of transmission subframes of PSS, SSS, and PBCH according to a twentieth exemplary implementation of the present disclosure.
Fig. 31 is a schematic diagram illustrating positions of transmission subframes of PSS, SSS, and PBCH according to a twenty-first exemplary implementation of the present disclosure.
Fig. 32 is a schematic diagram illustrating positions of transmission subframes of PSS, SSS, and PBCH according to a twenty-second exemplary implementation of the present disclosure.
Fig. 33 is a schematic diagram illustrating positions of transmission subframes of PSS, SSS, and PBCH according to a twenty-third exemplary implementation of the present disclosure.
Fig. 34 is a schematic diagram illustrating positions of transmission subframes of PSS, SSS, and PBCH according to a twenty-fourth exemplary implementation of the present disclosure.
Fig. 35 is a schematic diagram illustrating positions of transmission subframes of PSS, SSS, and PBCH according to a twenty-fifth exemplary implementation of the present disclosure.
Fig. 36 is a schematic diagram illustrating positions of transmission subframes of PSS, SSS, and PBCH according to a twenty-sixth exemplary implementation of the present disclosure.
Fig. 37 is a schematic diagram illustrating positions of transmission subframes of PSS, SSS, and PBCH according to a twenty-seventh exemplary implementation of the present disclosure.
Fig. 38 is a schematic diagram illustrating positions of transmission subframes of PSS, SSS, and PBCH according to a twenty-eighth exemplary implementation of the present disclosure.
Fig. 39 is a schematic diagram illustrating positions of transmission subframes of PSS, SSS, and PBCH according to a twenty-ninth exemplary implementation of the present disclosure.
Fig. 40 is a schematic diagram illustrating positions of transmission subframes of PSS, SSS, and PBCH according to a thirtieth exemplary implementation of the present disclosure.
Fig. 41 is a schematic diagram illustrating positions of transmission subframes of PSS, SSS, and PBCH according to a thirty-first exemplary implementation of the present disclosure.
Fig. 42 is a schematic diagram illustrating positions of transmission subframes of PSS, SSS, and PBCH according to a thirty-second exemplary implementation of the present disclosure.
Fig. 43 is a schematic diagram illustrating positions of transmission subframes of PSS, SSS, and PBCH according to a thirty-third exemplary implementation of the present disclosure.
Fig. 44 is a schematic diagram illustrating positions of transmission subframes of PSS, SSS, and PBCH according to a thirty-fourth exemplary implementation of the present disclosure.
Fig. 45 is a schematic diagram illustrating positions of transmission subframes of PSS, SSS, and PBCH according to a thirty-fifth exemplary implementation of the present disclosure.
Fig. 46 is a schematic diagram illustrating positions of transmission subframes of PSS, SSS, and PBCH according to a thirty-sixth exemplary implementation of the present disclosure.
Fig. 47 is a schematic diagram illustrating positions of transmission subframes of PSS, SSS, and PBCH according to a thirty-seventh exemplary implementation of the present disclosure.
Fig. 48 is a schematic diagram illustrating positions of transmission subframes of PSS, SSS, and PBCH according to a thirty-eighth exemplary implementation of the present disclosure.
Fig. 49 is a schematic diagram illustrating positions of transmission subframes of PSS, SSS, and PBCH according to a thirty-ninth exemplary implementation of the present disclosure.
Fig. 50 is a schematic diagram illustrating positions of transmission subframes of PSS, SSS, and PBCH according to a fortieth exemplary implementation of the present disclosure.
Fig. 51 is a schematic diagram illustrating positions of transmission subframes of PSS, SSS, and PBCH according to a forty-first exemplary implementation of the present disclosure.
Fig. 52 is a schcmatic diagram illustrating positions of transmission subframes of PSS, SSS, and PBCH according to a forty-second exemplary implementation of the present disclosure.
Fig. 53 is a schematic diagram illustrating positions of transmission subframes of PSS, SSS, and PBCH according to a forty-third exemplary implementation of the present disclosure.
Fig. 54 is a schematic diagram illustrating positions of transmission subframes of PSS, SSS, and PBCH according to a forty-fourth exemplary implementation of the present disclosure.
Fig. 55 is a schematic diagram illustrating positions of transmission subframes of PSS, SSS, and PBCH according to a forty-fifth exemplary implementation of the present disclosure.
Fig. 56 is a schematic diagram illustrating positions of transmission subframes of PSS, SSS, and PBCH according to a forty-sixth exemplary implementation of the present disclosure.
Fig. 57 is a schematic diagram illustrating positions of transmission subframes of PSS, SSS, and PBCH according to a forty-seventh exemplary implementation of the present disclosure.
Fig. 58 is a schematic diagram illustrating positions of transmission subframes of PSS, SSS, and PBCH according to a forty-eighth exemplary implementation of the present disclosure.
Fig. 59 is a schematic diagram illustrating positions of transmission subframes of PSS, SSS, and PBCH according to a forty-ninth exemplary implementation of the present disclosure.
Fig. 60 is a schematic diagram illustrating positions of transmission subframes of PSS, SSS, and PBCH according to a fiftieth exemplary implementation of the present disclosure.
Fig. 61 is a schematic diagram illustrating positions of transmission subframes of PSS, SSS, and PBCH according to a fifty-first exemplary implementation of the present disclosure.
Fig. 62 is a schematic diagram illustrating positions of transmission subframes of PSS, SSS, and PBCH according to a fifty-second exemplary implementation of the present disclosure.
Fig. 63 is a schematic diagram illustrating positions of transmission subframes of PSS, SSS, and PBCH according to a fifty-third exemplary implementation of the present disclosure.
Fig. 64 is a schematic diagram illustrating positions of transmission subframes of PSS, SSS, and PBCH according to a fifty-fourth exemplary implementation of the present disclosure.
Fig. 65 is a schematic diagram illustrating positions of transmission subframes of PSS, SSS, and PBCH according to a fifty-fifth exemplary implementation of the present disclosure.
Fig. 66 is a schematic diagram illustrating positions of transmission subframes of PSS, SSS, and PBCH according to a fifty-sixth exemplary implementation of the present disclosure.
Fig. 67 is a schcmatic diagram illustrating positions of transmission subframes of PSS, SSS, and PBCH according to a fifty-seventh exemplary implementation of the present disclosure.
Fig. 68 is a schematic diagram illustrating positions of transmission subframes of PSS, SSS, and PBCH according to a fifty-eighth exemplary implementation of the present disclosure.
Fig. 69 is a schematic diagram illustrating positions of transmission subframes of PSS, SSS, and PBCH according to a fifty-ninth exemplary implementation of the present disclosure.

### DETAILED DESCRIPTION

Hereinafter, embodiments of the present disclosure will be described in detail with reference to the accompanying drawings. It should be noted that, in the case of no conflict, the embodiments in the present disclosure and the features in the embodiments can be combined with each other arbitrarily.

It should be noted that the terms "first", "second", and the like in the description and claims of the present disclosure and the drawings are used to distinguish similar objects and do not necessarily describe a specific sequence or order.

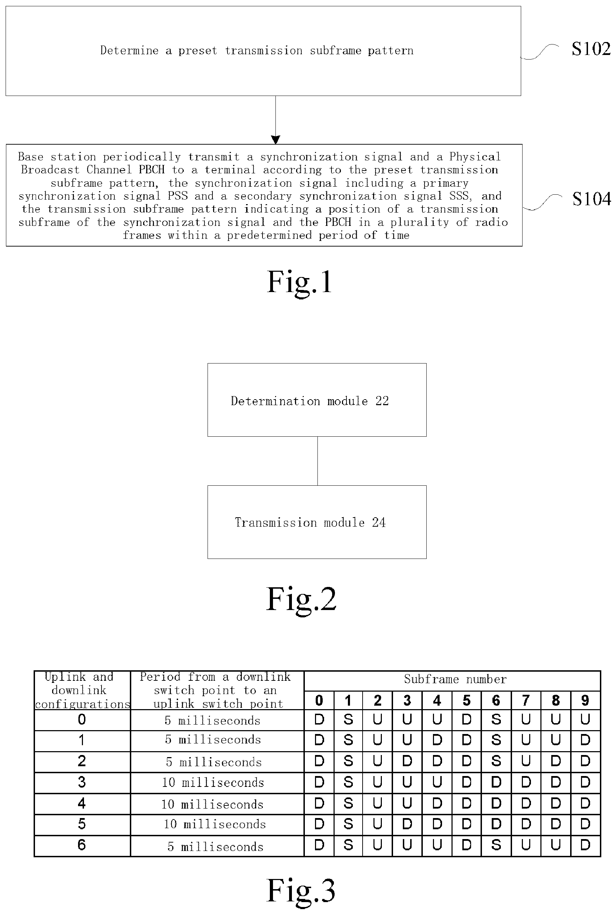

An embodiment of the present disclosure provides a synchronization signal transmission method. Fig. 1 is a flowchart of a synchronization signal transmission method according to an embodiment of the present disclosure. As shown in Fig. 1, the method includes the following steps.

In step S102, a preset transmission subframe pattern is determined.

In step S104, a base station periodically transmits a synchronization signal and a Physical Broadcast Channel PBCH to a terminal according to the preset transmission subframe pattern. The synchronization signal includes a primary synchronization signal PSS and a secondary synchronization signal SSS, and the transmission subframe pattern indicates a position of a transmission subframe for transmitting the synchronization signal and the PBCH in a plurality of radio frames within a predetermined period of time.

By the above steps, the base station periodically transmits a synchronization signal and a Physical Broadcast Channel PBCH to a terminal according to a preset transmission subframe pattern, the synchronization signal includes a primary synchronization signal PSS and a secondary synchronization signal SSS, and the transmission subframe pattern indicates a position of a transmission subframe for transmitting the synchronization signal and the PBCH in a plurality of radio frames within a predetermined period of time. The embodiment can solve the problem in the narrowband system of LTE that the designs of the synchronization signal and the physical broadcast channel are not unreasonable, thus realizing reasonable transmission of the synchronization signal and the physical broadcast channel in the narrowband system.

In an embodiment of the present disclosure, for a Time Division Duplex TDD system, transmission subframes in the transmission subframe pattern are downlink subframes for all uplink and downlink configurations of the TDD system.

In an embodiment of the present disclosure, for a Time Division Duplex TDD system, transmission subframes in the transmission subframe pattern are at least two of a subframe #0, a subframe #1, a subframe #5, and a subframe #6, and numbers of the subframes are the numbers of the subframes within one radio frame, starting from #0.

In an embodiment of the present disclosure, for a Frequency Division Duplex FDD system, transmission subframes in the transmission subframe pattern are at least two of a subframe #0, a subframe #4, a subframe #5 and a subframe #9, and indexes of the subframes are the indexes of the subframes within one radio frame, starting from #0.

In an embodiment of the present disclosure, the transmission subframe pattern is determined according to the number of subframes available for carrying the synchronization signal and the PBCH in one radio frame of a system.

In an embodiment of the present disclosure, when the number of subframes available for carrying the synchronization signal and the PBCH in the system is two, and when the synchronization signal occupies one subframe, the preset transmission subframe pattern is as follows: the PSS is transmitted on a subframe #0 of a radio frame that satisfies a transmission period requirement, the SSS is transmitted on a subframe #5 of a radio frame that satisfies the transmission period requirement, and the PBCH is transmitted on at least one of the subframe #0 and the subframe #5 of the radio frame that satisfies the transmission period requirement. In an embodiment of the present disclosure, when the number of subframes available for carrying the synchronization signal and the PBCH in the system is two, and when the synchronization signal occupies two subframes, the preset transmission subframe pattern is as follows: the PSS is transmitted on a subframe #0 and a subframe #5 of a radio frame that satisfies a transmission period requirement, the SSS is transmitted on a subframe #0 and a subframe #5 of a radio frame that satisfies the transmission period requirement, and the PBCH is transmitted on at least one of the subframe #0 and the subframe #5 of the radio frame that satisfies the transmission period requirement.

In an embodiment of the present disclosure, when the number of subframes available for carrying the synchronization signal and the PBCH in the system is two, and when the PSS occupies two subframes and the SSS occupies one subframe, the preset transmission subframe pattern is as follows: the PSS is transmitted on a subframe #0 and a subframe #5 of a radio frame that satisfies a transmission period requirement, the SSS is transmitted on the subframe #0 of the radio frame that satisfies the transmission period requirement, and the PBCH is transmitted on the subframe #5 of the radio frame that satisfies the transmission period requirement.

In an embodiment of the present disclosure, when the number of subframes available for carrying the synchronization signal and the PBCH in the system is three, and the synchronization signal occupies one subframe, the preset transmission subframe pattern satisfies the following positional relationship:
the PSS and the SSS are located in non-adjacent subframes; and
the SSS and the PBCH are located in adjacent subframes.

In an embodiment of the present disclosure, when the number of subframes available for carrying the synchronization signal and the PBCH in the system is three and the synchronization signal occupies two subframes, the preset transmission subframe pattern satisfies the following positional relationships:
two subframes occupied by the PSS are located in non-adjacent subframes;
two subframes occupied by the SSS are located in non-adjacent subframes;
the PSS and the SSS are located in subframes having the same subframe indexes in different radio frames; and
the PBCH and the SSS are located in adjacent subframes.

In an embodiment of the present disclosure, when the number of subframes available for carrying the synchronization signal and the PBCH in the system is three, and the synchronization signal occupies two subframes, the preset transmission subframe pattern satisfies the following positional relationship:
two subframes occupied by the PSS are located in adjacent subframes;
two subframes occupied by the SSS are located in adjacent subframes;
the PSS and the SSS are located in subframes having the same subframe indexes in different radio frames; and
the PBCH and the SSS are located in non-adjacent subframes.

In an embodiment of the present disclosure, when the number of subframes available for carrying the synchronization signal and the PBCH in the system is three, and the PSS occupies two subframes and the SSS occupies one subframe, the preset transmission pattern satisfies the following positional relationship:
two subframes occupied by the PSS are located in non-adjacent subframes; and
the PBCH and the SSS are located in adjacent subframes.

In an embodiment of the present disclosure, when the number of subframes available for carrying the synchronization signal and the PBCH in the system is four, and the synchronization signal occupies two subframes, the preset transmission pattern satisfies the following positional relationship:
two subframes occupied by the PSS are located in non-adjacent subframes;
two subframes occupied by the SSS are located in adjacent subframes;
the PSS and the SSS occupy subframes having subframe indexes which are not completely the same; and
the PBCH and the SSS are located in non-adjacent subframes.

In an embodiment of the present disclosure, when the number of subframes available for carrying the synchronization signal and the PBCH in the system is four, and the synchronization signal occupies two subframes, the preset transmission subframe pattern satisfies the following positional relationship:
two subframes occupied by the PSS are located in adjacent subframes;
two subframes occupied by the SSS are located in adjacent subframes;
the PSS and the SSS are located in subframes which have different subframe indexes; and
the PBCH and the SSS are located in non-adjacent subframes.

In an embodiment of the present disclosure, when the number of subframes available for carrying the synchronization signal and the PBCH in the system is four, and the PSS occupies two subframes and the SSS occupies one subframe, the preset transmission subframe pattern satisfies the following positional relationship:
two subframes occupied by the PSS are located in adjacent subframes; and
the PBCH and the SSS are located in adjacent subframes.

In an embodiment of the present disclosure, each of the PSS, the SSS and the PBCH has a transmission period of 10 milliseconds (ms), 20 milliseconds, 40 milliseconds or 80 milliseconds.

In an embodiment of the present disclosure, a transmission position of the PBCH in the transmission subframe pattern indicates an operation mode of the terminal in a narrowband system, and the operation mode of the narrowband system includes a stand-alone operation mode, an in-band operation mode and a guard band operation mode.

In an embodiment of the present disclosure, when the base station operates in the in-band operation mode, the base station transmits the PBCH on a preset subframe for the PBCH, and when the base station operates in the stand-alone operation mode, the base station transmits the PBCH on the first three Orthogonal Frequency Division Multiplexing OFDM symbols of the subframe for the PSS, and when the base station operates in the guard band operation mode, the base station transmits the PBCH on the first three OFDM symbols of the subframe for the SSS; or,
when the base station operates in the in-band operation mode, the base station transmits the PBCH only on the preset subframe for the PBCH, and when the base station operates in the stand-alone operation mode, the base station transmits the PBCH on the first three OFDM symbols of the subframe for the SSS, and when the base station operates in the guard band operation mode, the base station transmits the PBCH on the first three OFDM symbols of the subframe for the PSS.

An embodiment of the present disclosure also provides a synchronization signal transmission device. The device is used to implement the above embodiments and exemplary implementations, which have been described above and will not be described again. As used below, the term "module" may be a combination of software and/or hardware for realizing a predetermined function. Although the device described in the following embodiments arc preferably implemented in software, the implementation of hardware or a combination of software and hardware is also possible and can be conceived.

Fig. 2 is a block diagram of a synchronization signal transmission device according to an embodiment of the present disclosure. As shown in Fig. 2, the device is located in a base station and may include a determination module 22 and a transmission module 24.

The determination module 22 is configured to determine a preset transmission subframe pattern.

The transmission module 24 is configured to periodically transmit a synchronization signal and a Physical Broadcast Channel PBCH to a terminal according to the preset transmission subframe pattern. The synchronization signal includes a primary synchronization signal PSS and a secondary synchronization signal SSS, and the transmission subframe pattern is a position of a transmission subframe for transmitting the synchronization signal and the PBCH in a plurality of radio frames within a predetermined period of time.

In the above device, the determination module 22 determines a preset transmission subframe pattern, the transmission module 24 periodically transmits a synchronization signal and a Physical Broadcast Channel PBCH to a terminal according to a preset transmission subframe pattern, the synchronization signal includes a primary synchronization signal PSS and a secondary synchronization signal SSS, and the transmission subframe pattern indicates a position of a transmission subframe for transmitting the synchronization signal and the PBCH in a plurality of radio frames within a predetermined period of time. The embodiment can solve the problem in the narrowband system of LTE that the designs of the synchronization signal and the physical broadcast channel are not unreasonable, thus realizing reasonable transmission of the synchronization signal and the physical broadcast channel in the narrowband system.

In an embodiment of the present disclosure, for a Time Division Duplex TDD system, transmission subframes in the transmission subframe pattern are at least two of a subframe #0, a subframe #1, a subframe #5, and a subframe #6, and numbers of the subframes are the numbers of the subframes within one radio frame, starting from #0.

In an embodiment of the present disclosure, for a Frequency Division Duplex FDD system, transmission subframes in the transmission subframe pattern arc at least two of a subframe #0, a subframe #4, a subframe #5 and a subframe #9, and indexes of the subframes are the indexes of the subframes within one radio frame, starting from #0.

In an embodiment of the present disclosure, the transmission subframe pattern is determined according to the number of subframes available for carrying the synchronization signal and the PBCH in one radio frame of a system.

In an embodiment of the present disclosure, when the number of subframes available for carrying the synchronization signal and the PBCH in the system is two, and when the synchronization signal occupies one subframe, the preset transmission subframe pattern is as follows: the PSS is transmitted on a subframe #0 of a radio frame that satisfies a transmission period requirement, the SSS is transmitted on a subframe #5 of a radio frame that satisfies the transmission period requirement, and the PBCH is transmitted on a subframe #0 and/or a subframe #5 of a radio frame that satisfies the transmission period requirement.

In an embodiment of the present disclosure, when the number of subframes available for carrying the synchronization signal and the PBCH in the system is two, and when the synchronization signal occupies two subframes, the preset transmission subframe pattern is as follows: the PSS is transmitted on a subframe #0 and a subframe #5 of a radio frame that satisfies a transmission period requirement, the SSS is transmitted on the subframe #0 and the subframe #5 of the radio frame that satisfies the transmission period requirement, and the PBCH is transmitted on the subframe #0 and/or the subframe #5 of the radio frame that satisfies the transmission period requirement.

In an embodiment of the present disclosure, when the number of subframes available for carrying the synchronization signal and the PBCH in the system is two, and when the PSS occupies two subframes and the SSS occupies one subframe, the preset transmission subframe pattern is as follows: the PSS is transmitted on a subframe #0 and a subframe #5 of a radio frame that satisfies a transmission period requirement, the SSS is transmitted on a subframe #0 of a radio frame that satisfies the transmission period requirement, and the PBCH is transmitted on the subframe #5 of the radio frame that satisfies the transmission period requirement.

In an embodiment of the present disclosure, when the number of subframes available for carrying the synchronization signal and the PBCH in the system is three, and the synchronization signal occupies one subframe, the preset transmission subframe pattern satisfies the following positional relationship:
the PSS and the SSS are located in non-adjacent subframes; and
the SSS and the PBCH are located in adjacent subframes.

In an embodiment of the present disclosure, when the number of subframes available for carrying the synchronization signal and the PBCH in the system is three and the synchronization signal occupies two subframes, the preset transmission subframe pattern satisfies the following positional relationships:
two subframes occupied by the PSS arc located in non-adjaccnt subframes;
two subframes occupied by the SSS are located in non-adjacent subframes;
the PSS and the SSS are located in subframes having the same subframe indexes in different radio frames; and
the PBCH and the SSS are located in adjacent subframes.

In an embodiment of the present disclosure, when the number of subframes available for carrying the synchronization signal and the PBCH in the system is three, and the synchronization signal occupies two subframes, the preset transmission subframe pattern satisfies the following positional relationship:
two subframes occupied by the PSS are located in adjacent subframes;
two subframes occupied by the SSS are located in adjacent subframes;
the PSS and the SSS are located in subframes having the same subframe indexes in different radio frames; and
the PBCH and the SSS are located in non-adjacent subframes.

In an embodiment of the present disclosure, when the number of subframes available for carrying the synchronization signal and the PBCH in the system is three, and the PSS occupies two subframes and the SSS occupies one subframe, the preset transmission pattern satisfies the following positional relationship:
two subframes occupied by the PSS are located in non-adjacent subframes; and
the PBCH and the SSS are located in adjacent subframes.

In an embodiment of the present disclosure, when the number of subframes available for carrying the synchronization signal and the PBCH in the system is four, and the synchronization signal occupies two subframes, the preset transmission pattern satisfies the following positional relationship:
two subframes occupied by the PSS are located in non-adjacent subframes;
two subframes occupied by the SSS are located in adjacent subframes;
the PSS and the SSS occupy subframes having subframe indexes which are not completely the same; and
the PBCH and the SSS are located in non-adjacent subframes.

In an embodiment of the present disclosure, when the number of subframes available for carrying the synchronization signal and the PBCH in the system is four, and the synchronization signal occupies two subframes, the preset transmission subframe pattern satisfies the following positional relationship:
two subframes occupied by the PSS are located in adjacent subframes;
two subframes occupied by the SSS are located in adjacent subframes;
the PSS and the SSS are located in subframes which have different subframe indexes; and
the PBCH and the SSS are located in non-adjacent subframes.

In an embodiment of the present disclosure, when the number of subframes available for carrying the synchronization signal and the PBCH in the system is four, and the PSS occupies two subframes and the SSS occupies one subframe, the preset transmission subframe pattern satisfies the following positional relationship:
two subframes occupied by the PSS are located in adjacent subframes; and
the PBCH and the SSS are located in adjacent subframes.

In an embodiment of the present disclosure, each of the PSS, the SSS and the PBCH has a transmission period of 10 milliseconds, 20 milliseconds, 40 milliseconds or 80 milliseconds, and transmission periods of the PSS, the SSS and the PBCH may be different.

In an embodiment of the present disclosure, a transmission position of the PBCH in the transmission subframe pattern indicates an operation mode of the terminal in a narrowband system, and the operation mode of the narrowband system includes a stand-alone operation mode, an in-band operation mode and a guard band operation mode.

In an embodiment of the present disclosure, when the base station operates in the in-band operation mode, the base station transmits the PBCH on a preset subframe for the PBCH, and when the base station operates in the stand-alone operation mode, the base station transmits the PBCH on the first three Orthogonal Frequency Division Multiplexing OFDM symbols of the subframe for the PSS, and when the base station operates in the guard band operation mode, the base station transmits the PBCH on the first three OFDM symbols of the subframe for the SSS; or,
when the base station operates in the in-band operation mode, the base station transmits the PBCH only on the preset subframe for the PBCH, and when the base station operates in the stand-alone operation mode, the base station transmits the PBCH on the first three OFDM symbols of the subframe for the SSS, and when the base station operates in the guard band operation mode, the base station transmits the PBCH on the first three OFDM symbols of the subframe for the PSS.

In an embodiment of the present disclosure, transmission periods and/or positions in the periods of the PSS, SSS, and PBCH in the transmission subframe pattern indicate an operation mode of a narrowband system, and the operation mode of the narrowband system includes a stand-alone operation mode, an in-band operation mode and a guard band operation mode.

In an embodiment of the present disclosure, when the synchronization signal occupies two subframes in the transmission subframe pattern, a duplex mode of a system is indicated by an interval between subframes where two synchronization signals are located, and the duplex mode includes Frequency Division Duplex FDD and Time Division Duplex TDD.

Another embodiment of the present disclosure also provides a synchronization signal transmission system, including a base station and a terminal.

The base station periodically transmits a synchronization signal and a Physical Broadcast Channel PBCH to a terminal according to a preset transmission subframe pattern. The synchronization signal includes a primary synchronization signal PSS and a secondary synchronization signal SSS, and the transmission subframe pattern indicates a position of a transmission subframe for transmitting the synchronization signal and the PBCH in a plurality of radio frames within a predetermined period of time.

The terminal periodically and repeatedly receives the synchronization signal and the PBCH. The present disclosure will be described in detail below in conjunction with exemplary embodiments and implementations.

### Exemplary Embodiment 1:

Fig. 3 is a schematic diagram of seven uplink and downlink configurations in a TDD system according to an exemplary implementation of the present disclosure. As shown in Fig. 3, "D" in the figure represents a downlink subframe, "S" represents a special subframe, and "U" represents an uplink subframe. As can be seen from Fig. 3, in one radio frame, the subframes that are downlink subframes under all uplink and downlink configurations are subframes #0, #1, #5, and #6, and subframes #1 and #6 are special subframes. Since the synchronization signal (including the primary synchronization signal PSS and the secondary synchronization signal SSS) and the physical broadcast channel are both downlink signals/channels, they are common to all NB-LTE UEs, and thus the base station needs to ensure that the signals/channels can be transmitted under any uplink and downlink configurations. Therefore, for the TDD system, the subframes that transmit the synchronization signal(s) and the physical broadcast channel(s) are preferably subframes #0, #1, #5, and #6.

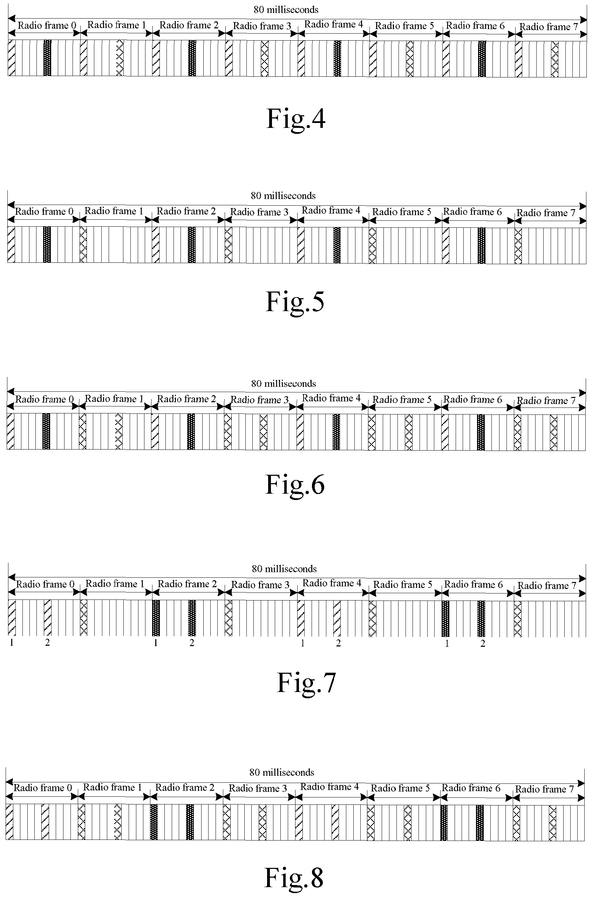

Fig. 4 is a schematic diagram illustrating positions of transmission subframes of PSS, SSS, and PBCH according to a first exemplary implementation of the present disclosure. As shown in FIG. 4, 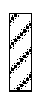 represents the PSS, 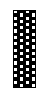 represents the SSS, and 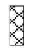 represents the PBCH. The PSS, SSS, and PBCH representations are the same in all of the following figures, and are not repeated in every example.

As shown in Fig. 4, when the number of subframes available for carrying the synchronization signal and the PBCH in the system is two, in the exemplary embodiment, it is assumed that the two subframes are subframes #0 and #5 (both are normal subframes), then a transmission subframe pattern provided by the present disclosure may be: PSS is transmitted on the subframe #0 of each radio frame, SSS is transmitted on the subframe #5 of even radio frames, and PBCH is transmitted on the subframe #5 of odd radio frames. Under suction condition, the PSS is transmitted 8 times and the SSS and PBCH are transmitted 4 times within 80 milliseconds. That is, the period of the PSS is 10 milliseconds, and the transmission periods of the SSS and the PBCH are 20 milliseconds. The periods of PSS, SSS and PBCH may be different. When the periods of PSS, SSS and PBCH are different, the period of PSS is smaller than that of SSS or PBCH.

Alternatively, as shown in Fig. 5, Fig. 5 is a schematic diagram illustrating positions of transmission subframes of PSS, SSS, and PBCH according to a second exemplary implementation of the present disclosure. PSS is transmitted on subframe #0 of even radio frames, and SSS is transmitted on subframe #5 of even radio frames, and PBCH is transmitted on subframe #0 of odd radio frames. Under such condition, the PSS, SSS, and PBCH are transmitted four times within 80 milliseconds. That is, the transmission periods of the PSS, SSS, and PBCH are all 20 milliseconds.

If an extreme coverage scenario is considered and the transmission density of the PBCH needs to be increased, a schematic diagram illustrating positions of the transmission subframes shown in Fig. 6 may be used. Fig. 6 is a schematic diagram illustrating positions of transmission subframes of PSS, SSS, and PBCH according to a third exemplary implementation of the present disclosure. In Fig. 6, the PSS is transmitted on the subframe #0 of the even radio frames, and the SSS is transmitted on the subframe #5 of the even radio frame, and the PBCH is transmitted on subframe #0 and subframe #5 of the odd radio frames. That is, the transmission periods of the PSS, SSS and PBCH are all 20 milliseconds. The difference from the previous embodiments is that the PBCH is transmitted twice within one period.

### Exemplary Embodiment 2:

For TDD, when number of subframes available for carrying the synchronization signal and the PBCH in the system is two, in the present exemplary embodiment, it is assumed that the two subframes are subframes #0 and #5 (both are normal subframes), and PSS and SSS occupy two subframes, respectively.

Fig. 7 is a schematic diagram illustrating positions of transmission subframes of PSS, SSS, and PBCH according to a fourth exemplary implementation of the present disclosure. As shown in Fig. 7, PSS-1 and PSS-2 are transmitted on subframes #0 and #5 of a radio frame whose radio frame number meets mod (the radio frame number, 4)=0, SSS-1 and SSS-2 are transmitted on subframes #0 and #5 of a radio frame whose radio frame number meets mod (the radio frame number, 4)=2, and the PBCH is transmitted on the subframe #0 of odd radio frames. The "mod" represents a modulo operation. In the exemplary embodiment, the transmission periods of the PSS and SSS are 40 milliseconds, and the transmission period of the PBCH is 20 milliseconds.

If an extreme coverage scenario is considered and the transmission density of the PBCH needs to be increased, a schematic diagram showing positions in transmission subframes as shown in Fig. 8 may be used. Fig. 8 is a schematic diagram illustrating positions of transmission subframes of PSS, SSS, and PBCH according to a fifth exemplary implementation of the present disclosure. In Fig. 8, PSS-1 and PSS-2 are transmitted on subframes #0 and #5 of a radio frame whose radio frame number meets mod (the radio frame number, 4)=0, SSS-1 and SSS-2 arc transmitted on subframes #0 and #5 of a radio frame whose radio frame number meets mod (the radio frame number, 4)=2, and the PBCH is transmitted on the subframes #0 and #5 of odd radio frames. In the exemplary embodiment, the transmission periods of the PSS and SSS are 40 milliseconds, and the transmission period of the PBCH is 20 milliseconds. And, the PBCH is transmitted twice within each period.

### Exemplary Embodiment 3:

For TDD, when number of subframes available for carrying the synchronization signal and the PBCH in the system is two, in the present exemplary embodiment, it is assumed that the two subframes are subframes #0 and #5 (both are normal subframes), the PSS occupies two subframes, and the SSS occupies one subframe.

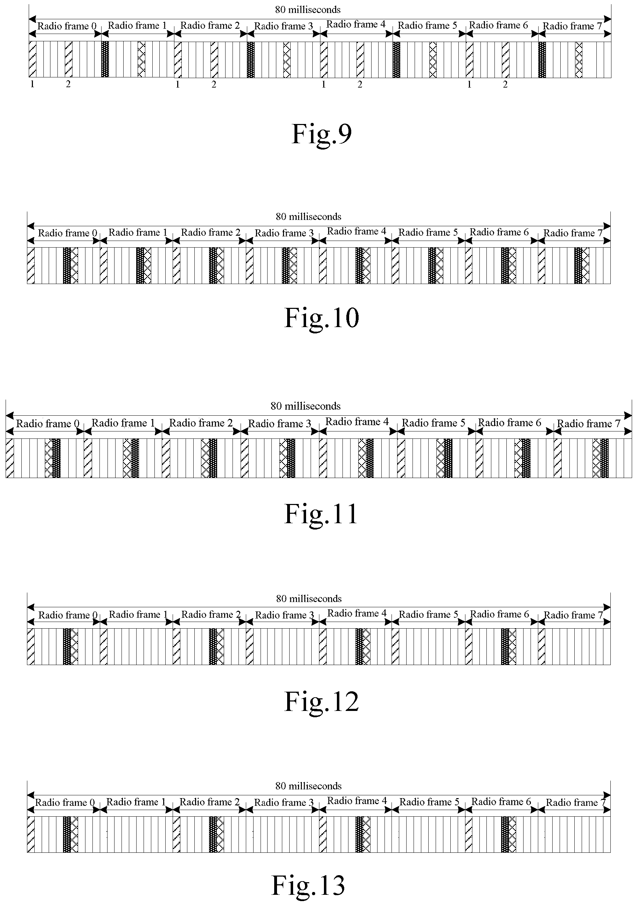

Fig. 9 is a schematic diagram illustrating positions of transmission subframes of PSS, SSS, and PBCH according to a sixth exemplary implementation of the present disclosure. As shown in Fig. 9, PSS-1 and PSS-2 are transmitted on subframes #0 and #5 of even radio frames, the SSS is transmitted on the subframe #0 of odd radio frames, and the PBCH is transmitted on the subframe #5 of odd radio frames. In the exemplary embodiment, the transmission periods of the PSS, SSS, and PBCH are 20 milliseconds, and the transmission periods of the PSS, SSS, and PBCH are the same.

In the exemplary embodiments 1 to 3, the subframes for transmitting the PSS, SSS, and PBCH are complete downlink subframes. The design of the PSS, SSS, and PBCH does not need to consider the configuration of the special subframe(s), and the design complexity is low.

If the subframes available for transmitting the synchronization signal and the PBCH in one radio frame in the FDD system are also subframe #0 and subframe #5, the transmission subframe patterns in the above-described exemplary embodiments 1 to 3 are also applicable in the FDD system. Repeated descriptions are omitted here.

In addition, the period configurations of the PSS, SSS, and PBCH in the exemplary embodiments 1 to 3 are merely examples, and other period configurations are also possible. If it is desired to reduce the overhead, the transmission density of the PSS/SSS/PBCH may be reduced on the basis of the transmission subframe pattern illustrated above, and the transmission density reductions may be different for each signal or channel. In general, the transmission density of the PSS is higher than that of the SSS and the PBCH, that is, the transmission period of the PSS is smaller than that of the SSS and the PBCH.

### Exemplary Embodiment 4:

When the number of subframes available for carrying the synchronization signal and the PBCH in the system is three, and the synchronization signal occupies one subframe, the preset transmission subframe pattern satisfies the following positional relationship:
the PSS and the SSS are located in non-adjacent subframes; and
the SSS and the PBCH are located in adjacent subframes.

### Exemplary Embodiment 4-1:

For the TDD system, it is assumed that the number of subframes available for carrying the synchronization signal and the PBCH in the system is three, and in the present exemplary embodiment, the three subframes are assumed to be subframes #0, #5 and #6, respectively, and the following positional relationship may be met: the PSS and the SSS are located in non-neighboring subframes; and the SSS and the PBCH are located in adjacent subframes. Fig. 10 is a schematic diagram illustrating positions of transmission subframes of PSS, SSS, and PBCH according to a seventh exemplary implementation of the present disclosure. Fig. 11 is a schematic diagram illustrating positions of transmission subframes of PSS, SSS, and PBCH according to an eighth exemplary implementation of the present disclosure. Figs. 10 and 11 are schematic diagrams illustrating the positions in two transmission subframes for the PSS, SSS, and PBCH satisfying the above positional relationship. In Fig. 10, PSS, SSS and PBCH are transmitted on subframes #0, #5 and #6 of each of the radio frames in turn, while in Fig. 11, PSS, PBCH and SSS arc transmitted on subframes #0, #5 and #6 of each of the radio frames in turn. In the exemplary embodiment, the transmission periods of the PSS, SSS and PBCH are all 10 milliseconds. If it is desired to reduce the overhead, the signal/channel transmission density may be reduced on the basis of the schematic diagram shown in Fig. 10. Fig. 12 is a schematic diagram illustrating positions of transmission subframes of PSS, SSS, and PBCH according to a ninth exemplary implementation of the present disclosure. Fig. 13 is a schematic diagram illustrating positions of transmission subframes of PSS, SSS, and PBCH according to a tenth exemplary implementation of the present disclosure. In Fig. 12, the transmission period of the PSS is 10 milliseconds, while the transmission periods of the SSS and the PBCH arc increased to 20 milliseconds. In Fig. 13, the transmission periods of the PSS, the SSS, and the PBCH are all increased to 20 milliseconds.

### Exemplary Embodiment 4-2:

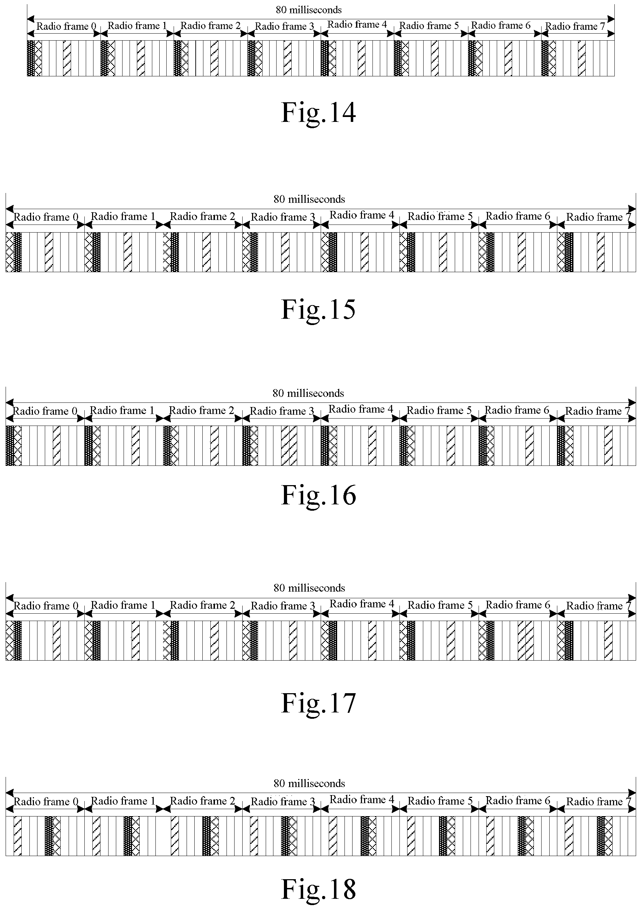

For the TDD system, it is assumed that the number of subframes available for carrying the synchronization signal and the PBCH in the system is three, and in the exemplary embodiment, the three subframes are assumed to be subframes #0, #1, and #5, respectively. The following positional relationships may be met: the PSS and the SSS are located in non-adjacent subframes, and the SSS and the PBCH are located in adjacent subframes. Fig. 14 is a schematic diagram illustrating positions of transmission subframes of PSS, SSS, and PBCH according to an eleventh exemplary implementation of the present disclosure. Fig. 15 is a schematic diagram illustrating positions of transmission subframes of PSS, SSS, and PBCH according to a twelfth exemplary implementation of the present disclosure. Figs. 14 and 15 are two schematic diagrams showing positions of the PSS, SSS and PBCH in transmission subframes satisfying the above positional relationships. In Fig. 14, the SSS, PBCH, and PSS are transmitted on subframes #0, #1, and #5 of each radio frame in turn, while in Fig. 15, PBCH, SSS, and PSS are transmitted on subframes #0, #1, and #5 of each radio frame in turn. In the exemplary embodiment, the transmission periods of the PSS, SSS and PBCH are all 10 milliseconds.

If the overhead is to be reduced, the transmission density of PSS, SSS, and PBCH may be reduced in the same manner as in the exemplary embodiment 4-1, and repeated descriptions are omitted here.

### Exemplary Embodiment 4-3:

For the TDD system, it is assumed that the number of subframes available for carrying the synchronization signal and the PBCH in the system is three, and in the present exemplary embodiment, it is assumed that the three subframes are subframes #0, #1, and #6, respectively. The following positional relationships may be met: the PSS and the SSS are located in non-adjacent subframes, and the SSS and the PBCH are located in adjacent subframes. Fig. 16 is a schematic diagram illustrating positions of transmission subframes of PSS, SSS, and PBCH according to a thirteenth exemplary implementation of the present disclosure. Fig. 17 is a schematic diagram illustrating positions of transmission subframes of PSS, SSS, and PBCH according to a fourteenth exemplary implementation of the present disclosure. Figs. 16 and 17 are two schematic diagrams showing positions of the PSS, SSS and PBCH in transmission subframes satisfying the above positional relationships. In Fig. 16, SSS, PBCH, and PSS are transmitted on subframes #0, #1, and #6 of each radio frame in turn, while in Fig. 17, PBCH, SSS, and PSS are transmitted on subframes #0, #1, and #6 of each radio frame in turn. In the exemplary embodiment, the transmission periods of the PSS, SSS and PBCH are all 10 milliseconds.

If the overhead is to be reduced, the transmission density of PSS, SSS, and PBCH may be reduced in the same manner as in the exemplary embodiment 4-1, and repeated descriptions are omitted here.

### Exemplary Embodiment 4-4:

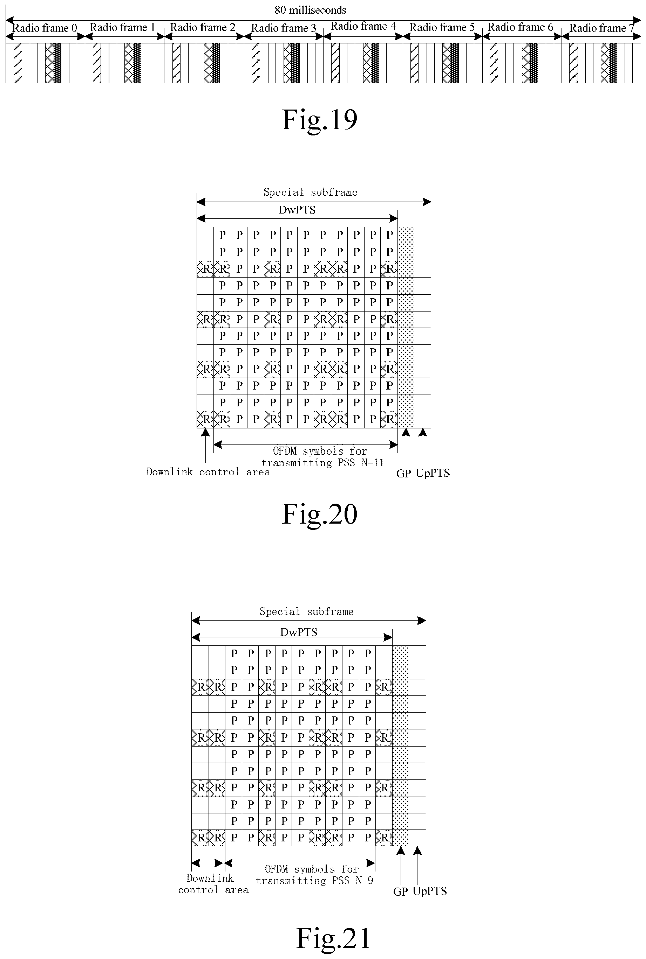

For the TDD system, it is assumed that the number of subframes available for carrying the synchronization signal and the PBCH in the system is three, and in the exemplary embodiment, the three subframes are assumed to be subframes #1, #5, and #6, respectively. The following positional relationships may be met: the PSS and the SSS are located in non-adjacent subframes, and the SSS and the PBCH are located in adjacent subframes. Fig. 18 is a schematic diagram illustrating positions of transmission subframes of PSS, SSS, and PBCH according to a fifteenth exemplary implementation of the present disclosure. Fig. 19 is a schematic diagram illustrating positions of transmission subframes of PSS, SSS, and PBCH according to a sixteenth exemplary implementation of the present disclosure. Figs. 18 and 19 are two schematic diagrams showing positions of the PSS, SSS and PBCH in transmission subframes satisfying the above positional relationships. In Fig. 18, PSS, SSS, and PBCH arc sequentially transmitted on subframes #1, #5, and #6 of each radio frame, and in FIG. 19, PSS, PBCH and SSS are sequentially transmitted on subframes #1, #5, and #6 of each radio frame. In the exemplary embodiment, the transmission periods of the PSS, SSS and PBCH are all 10 milliseconds.

If the overhead is to be reduced, the transmission density of PSS, SSS, and PBCH may be reduced in the same manner as in the exemplary embodiment 4-1, and repeated descriptions are omitted here.

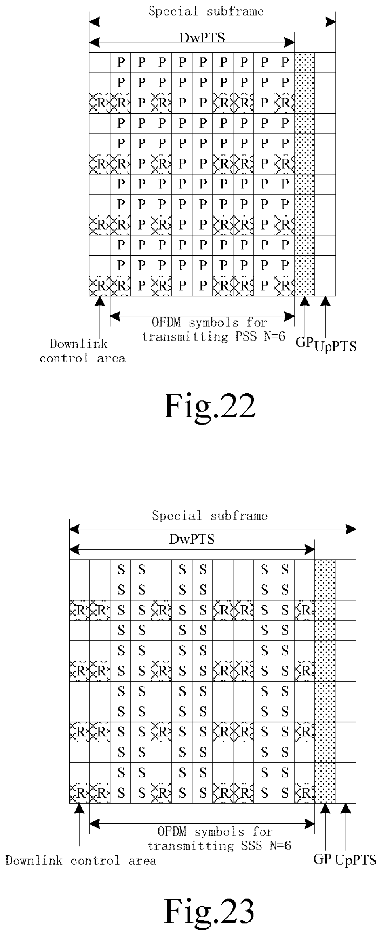

When the synchronization signal(s) is(are) transmitted on the normal subframes #0 and #5, and the PBCH is transmitted on the special subframe #1 or #6, the downlink transmission area of the special subframe is related to the configuration of the special subframe. For PBCH sent on the special subframe, it is assumed that rate matching is performed according to a predefined downlink area. The predefined downlink area is preferably the largest area except the downlink control area in the downlink area in a special subframe configuration. That is, in the case of a normal cyclic prefix, 10 OFDM symbols are occupied. In the case of an extended cyclic prefix, 8 OFDM symbols are occupied. It is assumed here that the downlink control area occupies the first two OFDM symbols of a subframe in a special subframe. When the PBCH is transmitted on the normal subframes #0 and #5 and the synchronization signal(s) is(are) transmitted on the special subframes #1 and #6, the downlink transmission area of the special subframe is related to the configuration of the special subframe. For the synchronization signal(s) transmitted on the special subframe, it is assumed that the number of OFDM symbols occupied by the synchronization signal(s) is determined on the basis that the downlink area in the special subframe is the maximum. The maximum area in the downlink area occupies 12 OFDM symbols in the case of normal cyclic prefix, and 10 OFDM symbols in the case of extended cyclic prefix. Considering that the downlink control area of the special subframe occupies the first one or two OFDM symbols of the subframe and the symbol length of the PSS candidate is 9 or 11, the PSS is transmitted in the special subframe and Fig. 20 or 21 may be referred to in the case of normal cyclic prefix. Fig. 20 is a schematic diagram illustrating a first transmission situation for sending the PSS in a special subframe according to an exemplary implementation of the present disclosure. In the schcmatic diagram, the PSS occupies 11 OFDM symbols, and the PSS starts from symbol #1 of a special subframe (the symbols in a subframe are numbered from #0). Fig. 21 is a schematic diagram illustrating a second transmission situation for sending the PSS in a special subframe according to an exemplary implementation of the present disclosure. In the schematic diagram, the PSS occupies 9 OFDM symbols, and the PSS starts from the symbol #2 of the special subframe (the symbols in a subframe are numbered from #0). In the case of the extended cyclic prefix, Fig. 22 may be referred to. Fig. 22 is a schematic diagram illustrating a third transmission situation for sending the PSS in a special subframe according to an exemplary implementation of the present disclosure. In the schematic diagram, the PSS occupies 9 OFDM symbols, and the PSS starts from the symbol #1 of the special subframe (the symbols in a subframe are numbered from #0). The PSS is mapped to N consecutive OFDM symbols of a subframe. When a reference signal is encountered, a resource unit corresponding to the reference signal will be dropped. The preferred value or exemplary value of N is 9 or 11.

For the situation where the SSS is transmitted in special subframes, Figs. 20-22 may be referred to, and only the symbols for transmitting the PSS in the drawings need to be replaced by the symbols for transmitting the SSS. Under such condition, for the transmitted SSS, if the reference signal is encountered, the resource unit corresponding to the reference signal will be dropped. Alternatively, the manner for sending the SSS as shown in Fig. 23 may be used. Fig. 23 is a schematic diagram illustrating a first transmission situation for sending the SSS in a special subframe according to an exemplary implementation of the present disclosure. The SSS is transmitted on symbols where there is no reference signal.

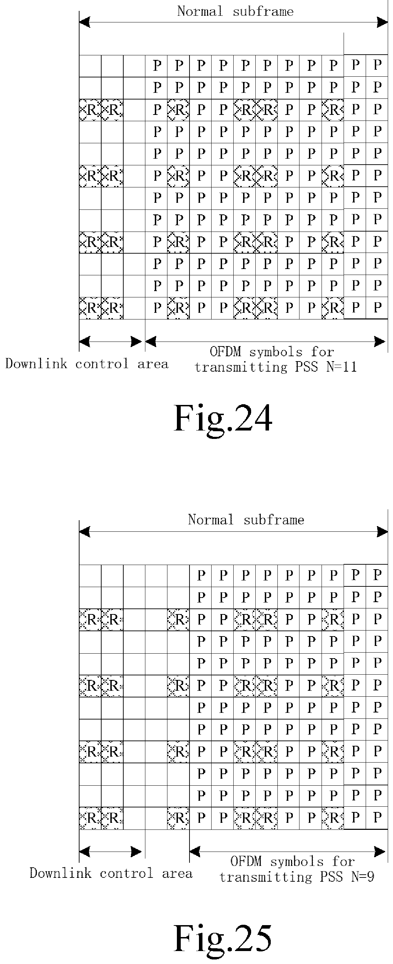

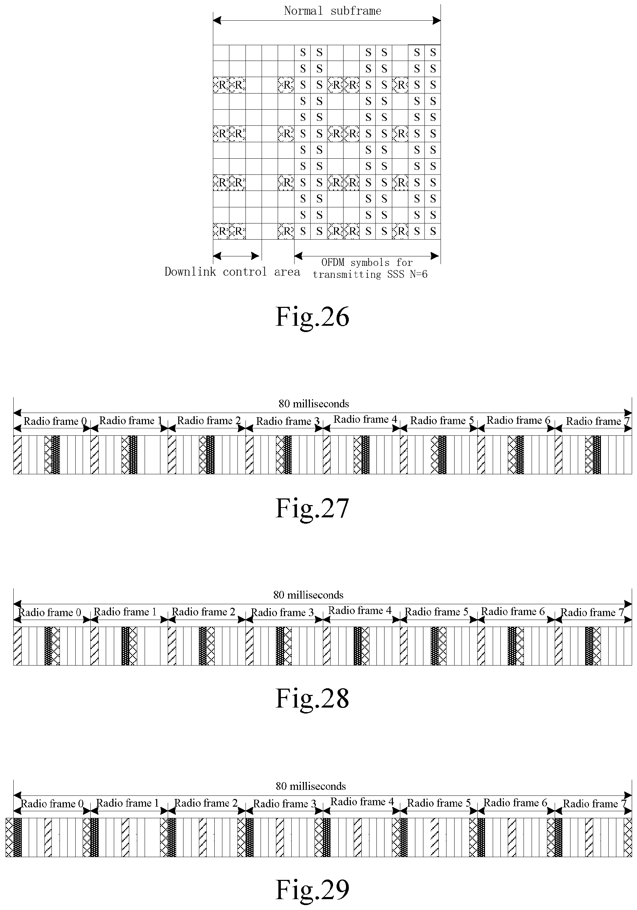

When the synchronization signal(s) is(are) transmitted on normal subframes, the PSS may be transmitted as shown in Fig. 24 or 25. Fig. 24 is a schematic diagram illustrating a second transmission situation for sending the PSS in a normal subframe according to an exemplary implementation of the present disclosure. Fig. 25 is a schematic diagram illustrating a third transmission situation for sending the PSS in a normal subframe according to an exemplary implementation of the present disclosure. Similarly, when the SSS is transmitted on normal subframes, Figs. 24 and 25 may be referred to, only the symbols for sending the PSS in the drawings need to be replaced by the symbols for sending the SSS. Alternatively, the manner for sending the SSS as shown in Fig. 26 may be used. Fig. 26 is a schcmatic diagram illustrating a first transmission situation for sending the SSS in a normal subframe according to an exemplary implementation of the present disclosure. The SSS is transmitted only on OFDM symbols where there is no reference signal.

For the TDD system, subframe #0 and subframe #5 are normal subframes, and subframe #1 and subframe #6 are special subframes. Considering that PSS and SSS are designed based on sequence, that is, the signals on the PSS and SSS are sequence signals, and the PBCH carries the necessary system information (MIB: master information block), the subframes for sending the PSS and the SSS are preferably of the same subframe type. For example, both the subframes for sending the PSS and the SSS arc the normal subframes, or both the subframes for sending the PSS and the SSS are the special subframes, and the PBCH is sent on another type of subframe. In the 8 subframe transmission patterns in the exemplary embodiment 4, the above requirements are satisfied in Fig. 10, Fig. 14, Fig. 17 and Fig. 19. In the transmission subframe patterns of Figs. 10 and 14, PSS and SSS are transmitted on the subframe # 0 or subframe #5, while PBCH is transmitted on subframe #1 or subframe #6. In the transmission subframe patterns of Figs. 17 and 19, PSS and SSS are transmitted on subframe #1 or subframe #6, while the PBCH is transmitted on subframe #0 or subframe #5. Considering that the anti-interference ability of the synchronization signal is stronger than that of the PBCH, the synchronization signal is mainly detected in a sequence-dependent manner (a sequence-related manner). Therefore, according to an exemplary embodiment, the synchronization signal(s) is(are) transmitted on the special subframes #1 and #6, and accordingly the robustness of the system is better. Therefore, in the subframe transmission patterns in the exemplary embodiment 4, the subframe transmission patterns of Figs. 17 and 19 are preferred patterns.

### Exemplary Embodiment 5:

When the number of subframes available for carrying the synchronization signal and the PBCH in the system is three and the synchronization signal occupies one subframe, the preset transmission subframe pattern satisfies the following positional relationships:
the PSS and the SSS are located in non-adjacent subframes; and
the SSS and the PBCH are located in adjacent subframes.

### Exemplary Embodiment 5-1:

For the FDD system, it is assumed that the number of subframes available for carrying the synchronization signal and the PBCH in the system is three, and in the exemplary embodiment, it is assumed that the three subframes are subframes #0, #4, and #5, respectively. The following relationships may be met: the PSS and the SSS are located in non-adjacent subframes, and the SSS and the PBCH are located in adjacent subframes. Fig. 27 is a schematic diagram illustrating positions of transmission subframes of PSS, SSS, and PBCH according to a seventeenth exemplary implementation of the present disclosure. Fig. 28 is a schematic diagram illustrating positions of transmission subframes of PSS, SSS, and PBCH according to an eighteenth exemplary implementation of the present disclosure. Figs. 27 and 28 are two schematic diagrams showing positions of the PSS, SSS and PBCH in transmission subframes satisfying the above positional relationships. In Fig. 27, PSS, SSS, and PBCH are sequentially transmitted on subframes #0, #4, and #5 of each radio frame, while in Fig. 28, PSS, PBCH and SSS are sequentially transmitted on subframes #0, #4, and #5 of each radio frame. In the exemplary embodiment, the transmission periods of the PSS, SSS and PBCH are all 10 milliseconds.

If the overhead is to be reduced, the transmission density of PSS, SSS, and PBCH may be reduced in the same manner as in the exemplary embodiment 4-1, and repeated descriptions are omitted here.

### Exemplary Embodiment 5-2:

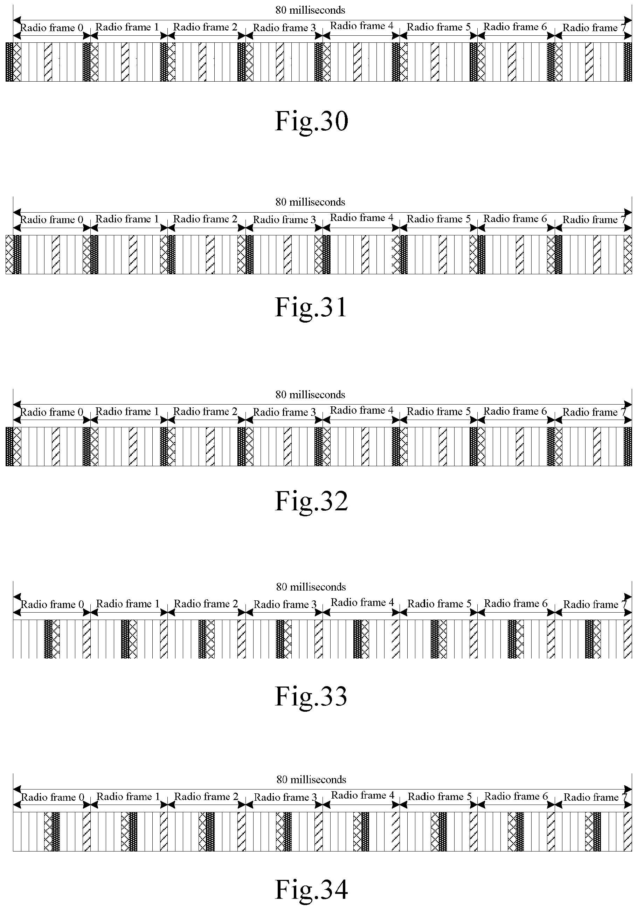

For the FDD system, it is assumed that the number of subframes available for carrying the synchronization signal and the PBCH in the system is three, and in the present exemplary embodiment, the three subframes are assumed to be subframes #0, #4, and #9, respectively. The following relationships may be met: the PSS and the SSS are located in non-adjacent subframes, and the SSS and the PBCH are located in adjacent subframes. Fig. 29 is a schematic diagram illustrating positions of transmission subframes of PSS, SSS, and PBCH according to a nineteenth exemplary implementation of the present disclosure. Fig. 30 is a schematic diagram illustrating positions of transmission subframes of PSS, SSS, and PBCH according to a twentieth exemplary implementation of the present disclosure. Figs. 29 and 30 are two schematic diagrams showing positions of the PSS, SSS and PBCH in transmission subframes satisfying the above positional relationships. In Fig. 29, SSS, PSS and PBCH arc sequentially transmitted on subframes #0, #4, and #9 of each radio frame, while in Fig. 30, PBCH, PSS, and SSS are sequentially transmitted on subframes #0, #4, and #9 of each radio frame. In the exemplary embodiment, the transmission periods of the PSS, SSS and PBCH are all 10 milliseconds.

If the overhead is to be reduced, the transmission density of PSS, SSS, and PBCH may be reduced in the same manner as in the exemplary embodiment 4-1, and repeated descriptions are omitted here.

### Exemplary Embodiment 5-3:

For the FDD system, it is assumed that the number of subframes available for carrying the synchronization signal and the PBCH in the system is three, and in the present exemplary embodiment, the three subframes are assumed to be subframes #0, #5, and #9, respectively. The following relationships may be met: the PSS and the SSS are located in non-adjacent subframes, and the SSS and the PBCH are located in adjacent subframes. Fig. 31 is a schematic diagram illustrating positions of transmission subframes of PSS, SSS, and PBCH according to a twenty-first exemplary implementation of the present disclosure. Fig. 32 is a schematic diagram illustrating positions of transmission subframes of PSS, SSS, and PBCH according to a twenty-second exemplary implementation of the present disclosure. Figs. 31 and 32 are two schematic diagrams showing positions of the PSS, SSS and PBCH in transmission subframes satisfying the above positional relationships. In Fig. 31, SSS, PSS and PBCH are sequentially transmitted on subframes #0, #5, and #9 of each radio frame, while in Fig. 32, PBCH, PSS, and SSS are sequentially transmitted on subframes #0, #5, and #9 of each radio frame. In the exemplary embodiment, the transmission periods of the PSS, SSS and PBCH are all 10 milliseconds.

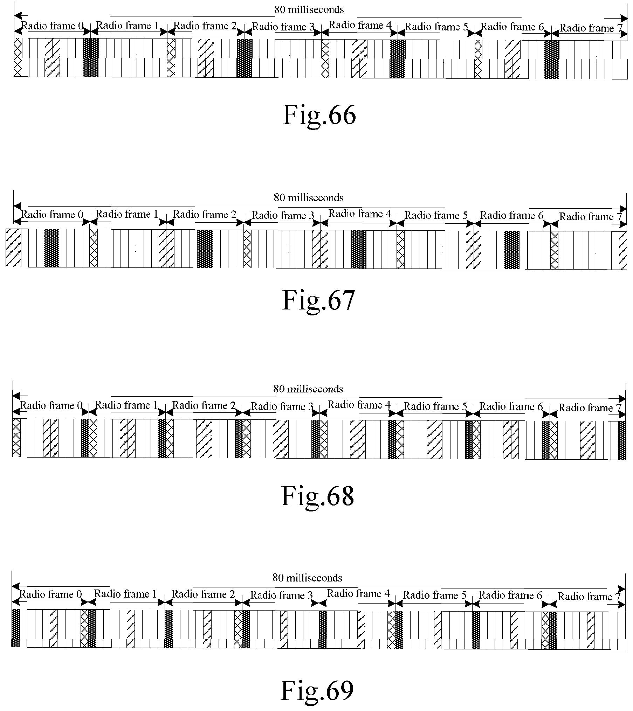

If the overhead is to be reduced, the transmission periods of the PSS, SSS or PBCH may be increased. As shown in Fig. 69, in this exemplary embodiment, the transmission periods of the PBCH and the PSS are 10 milliseconds, the PBCH and the PSS are located in the subframe #0 and subframe #5 of each radio frame, respectively, the transmission period of the SSS is 20 milliseconds and the SSS is located in the subframe #9 of even radio frames.

### Exemplary Embodiment 5-4:

For the FDD system, it is assumed that the number of subframes available for carrying the synchronization signal and the PBCH in the system is three, and in the present exemplary embodiment, the three subframes are assumed to be subframes #4, #5, and #9, respectively. The following relationships may be met: the PSS and the SSS are located in non-adjacent subframes, and the SSS and the PBCH are located in adjacent subframes. Fig. 33 is a schematic diagram illustrating positions of transmission subframes of PSS, SSS, and PBCH according to a twenty-third exemplary implementation of the present disclosure. Fig. 34 is a schematic diagram illustrating positions of transmission subframes of PSS, SSS, and PBCH according to a twenty-fourth exemplary implementation of the present disclosure. Figs. 33 and 34 arc two schematic diagrams showing positions of the PSS, SSS and PBCH in transmission subframes satisfying the above positional relationships. In Fig. 33, SSS, PSS and PBCH are sequentially transmitted on subframes #4, #5, and #9 of each radio frame, while in Fig. 34, PBCH, PSS, and SSS are sequentially transmitted on subframes #4, #5, and #9 of each radio frame. In the exemplary embodiment, the transmission periods of the PSS, SSS and PBCH are all 10 milliseconds.

If the overhead is to be reduced, the transmission density of PSS, SSS, and PBCH may be reduced in the same manner as in the exemplary embodiment 4-1, and repeated descriptions are omitted here.

For the FDD system, since all the subframes are normal subframes, the design of the PSS, SSS, and PBCH may refer to the design of the PSS, the SSS, and PBCH in the normal subframes in the TDD system, and repeated descriptions are omitted here.

In the existing LTE system, the UE distinguishes the FDD system and the TDD system by different relative positions of the PSS and the SSS. In a narrowband LTE system, the terminal also needs to distinguish between TDD and FDD systems. Therefore, for narrowband TDD and FDD systems, FDD and TDD systems may also be distinguished by the relative positions of PSS and SSS.

When the TDD system adopts Fig. 17 or Fig. 19 of the exemplary embodiment 4 as the transmission subframe pattern for transmitting the synchronization signal and the PBCH, the relative positions of the PSS and the SSS are separated by 5 subframes. In the FDD system, it is preferred that the relative positions of the PSS and the SSS are not separated by 5 subframes. In the exemplary embodiment 5, in the transmission subframe patterns of Figs. 28, 29, 32, and 34, the relative positions of the PSS and the SSS are separated by 4 subframes. Therefore, the 4 subframe transmission patterns are the preferred subframe transmission patterns in the FDD system.

### Exemplary Embodiment 6:

When the number of subframes available for carrying the synchronization signal and the PBCH in the system is three and the synchronization signal occupies two subframes, the preset transmission subframe pattern satisfies the following positional relationships:
two subframes occupied by the PSS are located in non-adjacent subframes;
two subframes occupied by the SSS arc located in non-adjacent subframes;
the PSS and the SSS are located in subframes having the same subframe indexes in different radio frames; and
the PBCH and the SSS are located in adjacent subframes.

### Exemplary Embodiment 6-1:

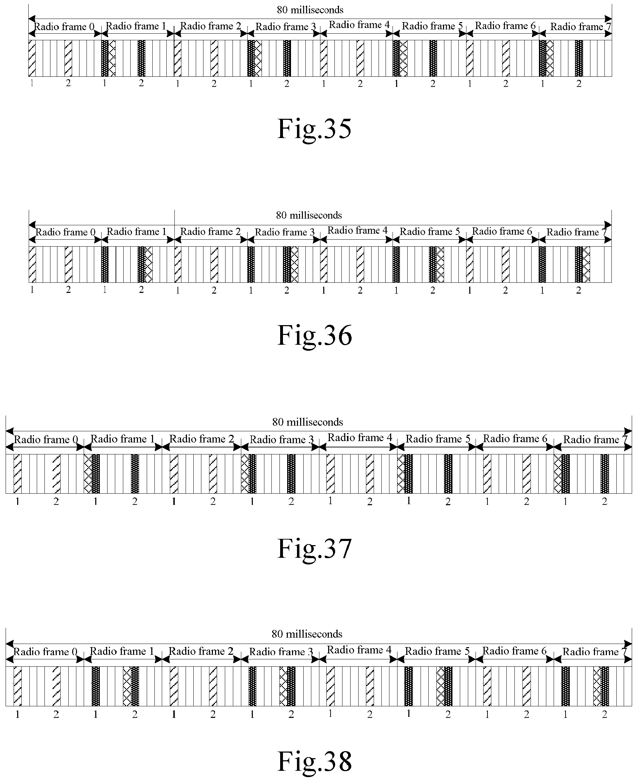

For TDD, when the number of subframes available for carrying the synchronization signal and the PBCH in the system is three, in the exemplary embodiment, the three subframes are subframes #0, #1, and #5. Fig. 35 is a schematic diagram illustrating positions of transmission subframes of PSS, SSS, and PBCH according to a twenty-fifth exemplary implementation of the present disclosure. Fig. 35 is a schematic diagram showing positions of the PSS, SSS and PBCH in transmission subframes satisfying the above positional relationships. In Fig. 35, PSS-1 and PSS-2 are transmitted on subframes #0 and #5 of even radio frames, SSS-1 and SSS-2 are transmitted on subframes #0 and #5 of odd radio frames, and the PBCH is transmitted on subframe #1 of odd radio frames. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #1 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 6-2:

For TDD, when the number of subframes available for carrying the synchronization signal and the PBCH in the system is three, in the exemplary embodiment, the three subframes are subframes #0, #5, and #6. Fig. 36 is a schematic diagram illustrating positions of transmission subframes of PSS, SSS, and PBCH according to a twenty-sixth exemplary implementation of the present disclosure. Fig. 36 is a schematic diagram showing positions of the PSS, SSS and PBCH in transmission subframes satisfying the above positional relationships. In Fig. 36, PSS-1 and PSS-2 are transmitted on subframes #0 and #5 of even radio frames, SSS-1 and SSS-2 are transmitted on subframes #0 and #5 of odd radio frames, and the PBCH is transmitted on subframe #6 of odd radio frames. In the exemplary embodiment, the transmission periods of the PSS, SSS and PBCH arc all 20 milliseconds.

If the extreme coverage scenario is considered, the transmission density of the PBCH may be increased, and the PBCH may be transmitted on subframe #1 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 6-3:

For TDD, when the number of subframes available for carrying the synchronization signal and the PBCH in the system is three, in the exemplary embodiment, the three subframes are subframes #0, #1, and #6. Fig. 37 is a schematic diagram illustrating positions of transmission subframes of PSS, SSS, and PBCH according to a twenty-seventh exemplary implementation of the present disclosure. Fig. 37 is a schematic diagram showing positions of the PSS, SSS and PBCH in transmission subframes satisfying the above positional relationships. In Fig. 37, PSS-1 and PSS-2 are transmitted on subframes #1 and #6 of even radio frames, SSS-1 and SSS-2 are transmitted on subframes #1 and #6 of odd radio frames, and the PBCH is transmitted on subframe #0 of odd radio frames. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #0 of each radio frame.

If the overhead is to be reduced, the transmission density of PSS, SSS, and PBCH may be reduced in the same manner as in the exemplary embodiment 4-1, and repeated descriptions arc omitted here.

### Exemplary Embodiment 6-4:

For TDD, when the number of subframes available for carrying the synchronization signal and the PBCH in the system is three, in the exemplary embodiment, the three subframes are subframes #1, #5, and #6. Fig. 38 is a schematic diagram illustrating positions of transmission subframes of PSS, SSS, and PBCH according to a twenty-eighth exemplary implementation of the present disclosure. Fig. 38 is a schematic diagram showing positions of the PSS, SSS and PBCH in transmission subframes satisfying the above positional relationships. In Fig. 38, PSS-1 and PSS-2 are transmitted on subframes #1 and #6 of even radio frames, SSS-1 and SSS-2 arc transmitted on subframes #1 and #6 of odd radio frames, and the PBCH is transmitted on subframe #5 of odd radio frames. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #5 of each radio frame.

If the overhead is to be reduced, the transmission density of PSS, SSS, and PBCH may be reduced in the same manner as in the exemplary embodiment 4-1, and repeated descriptions are omitted here.

According to the preferred design principle mentioned in the exemplary embodiment 4, in the subframe transmission pattern in this exemplary embodiment, the PSS and the SSS are preferably transmitted on subframes of the same subframe type, that is, the PSS and the SSS are transmitted the subframe #0 and subframe #5 at the same time, or transmitted on subframe #1 and subframe #6 at the same time. The closest interval between PSS and SSS is 5 ms.

### Exemplary Embodiment 7:

When the number of subframes available for carrying the synchronization signal and the PBCH in the system is three and the synchronization signal occupies two subframes, the preset transmission subframe pattern satisfies the following positional relationships:
two subframes occupied by the PSS are located in non-adjacent subframes;
two subframes occupied by the SSS are located in non-adjacent subframes;
the PSS and the SSS are located in subframes having the same subframe indexes in different radio frames; and
the PBCH and the SSS are located in adjacent subframes.

### Exemplary Embodiment 7-1:

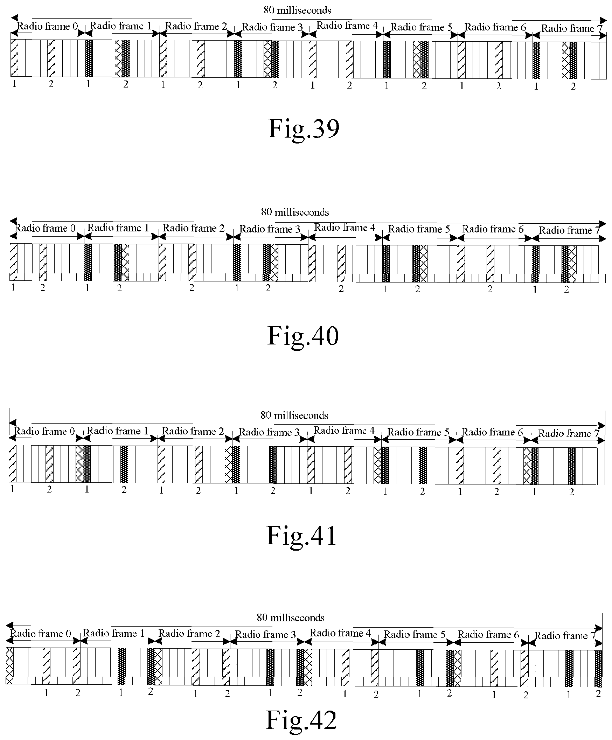

For FDD, when the number of subframes available for carrying the synchronization signal and the PBCH in the system is three, in the exemplary embodiment, the three subframes are subframes #0, #4, and #5. Fig. 39 is a schematic diagram illustrating positions of transmission subframes of PSS, SSS, and PBCH according to a twenty-ninth exemplary implementation of the present disclosure. Fig. 40 is a schematic diagram illustrating positions of transmission subframes of PSS, SSS, and PBCH according to a thirtieth exemplary implementation of the present disclosure. Figs. 39 and 40 arc two schematic diagrams showing positions of the PSS, SSS and PBCH in transmission subframes satisfying the above positional relationships. In Fig. 39, PSS-1 and PSS-2 are transmitted on subframes #0 and #5 of even radio frames, SSS-1 and SSS-2 are transmitted on subframes #0 and #5 of odd radio frames, and the PBCH is transmitted on subframe #4 of odd radio frames. In Fig. 40, PSS-1 and PSS-2 are transmitted on subframes #0 and #4 of even radio frames, SSS-1 and SSS-2 are transmitted on subframes #0 and #4 of odd radio frames, and the PBCH is transmitted on subframe #5 of odd radio frames. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #4 or subframe #5 of each radio frame (corresponding to the subframe transmission patterns of Figs. 39 and 40, respectively). If the overhead is to be reduced, the transmission density of PSS, SSS, and PBCH may be reduced in the same manner as in the exemplary embodiment 4-1, and repeated descriptions are omitted here.

### Exemplary Embodiment 7-2:

For FDD, when the number of subframes available for carrying the synchronization signal and the PBCH in the system is three, in the exemplary embodiment, the three subframes are subframes #0, #5, and #9. Fig. 41 is a schematic diagram illustrating positions of transmission subframes of PSS, SSS, and PBCH according to a thirty-first exemplary implementation of the present disclosure. Fig. 42 is a schematic diagram illustrating positions of transmission subframes of PSS, SSS, and PBCH according to a thirty-sccond exemplary implementation of the present disclosure. Figs. 41 and 42 are two schematic diagrams showing positions of the PSS, SSS and PBCH in transmission subframes satisfying the above positional relationships. In Fig. 41, PSS-1 and PSS-2 are transmitted on subframes #0 and #5 of even radio frames, SSS-1 and SSS-2 are transmitted on subframes #0 and #5 of odd radio frames, and the PBCH is transmitted on subframe #9 of even radio frames. In Fig. 42, PSS-1 and PSS-2 are transmitted on subframes #5 and #9 of even radio frames, SSS-1 and SSS-2 are transmitted on subframes #5 and #9 of odd radio frames, and the PBCH is transmitted on subframe #0 of even radio frames. In the exemplary embodiment, the transmission periods of the PSS, SSS and PBCH arc all 20 milliseconds.

If the extreme coverage scenario is considered, the transmission density of the PBCH may be increased, and the PBCH may be transmitted on subframe #9 or subframe #0 of each radio frame (corresponding to the subframe transmission patterns of Figs. 41 and 42, respectively). If the overhead is to be reduced, the transmission density of PSS, SSS, and PBCH may be reduced in the same manner as in the exemplary embodiment 4-1, and repeated descriptions are omitted here.

### Exemplary Embodiment 7-3:

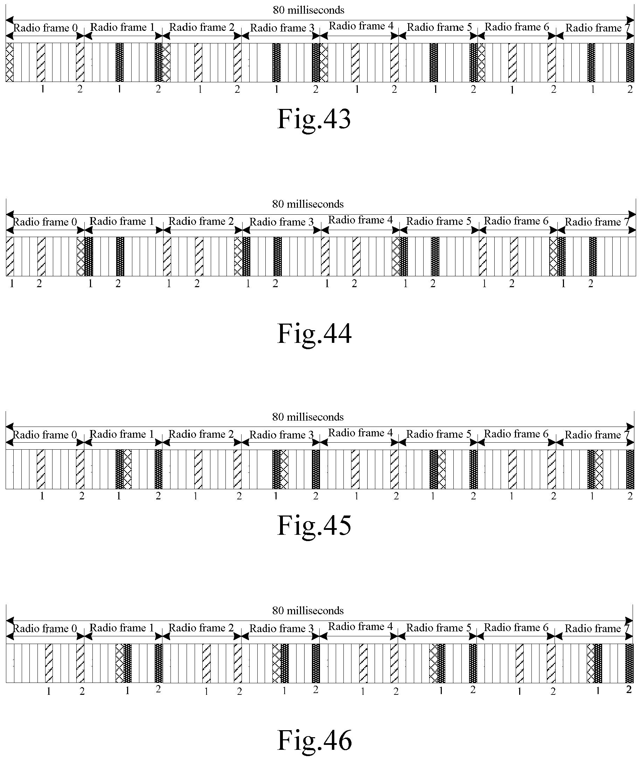

For FDD, when the number of subframes available for carrying the synchronization signal and the PBCH in the system is three, in the exemplary embodiment, the three subframes are subframes #0, #4, and #9. Fig. 43 is a schematic diagram illustrating positions of transmission subframes of PSS, SSS, and PBCH according to a thirty-third exemplary implementation of the present disclosure. Fig. 44 is a schematic diagram illustrating positions of transmission subframes of PSS, SSS, and PBCH according to a thirty-fourth exemplary implementation of the present disclosure. Figs. 43 and 44 are schematic diagrams showing positions of the PSS, SSS and PBCH in transmission subframes satisfying the above positional relationships. In Fig. 43, PSS-1 and PSS-2 are transmitted on subframes #4 and #9 of even radio frames, SSS-1 and SSS-2 are transmitted on subframes #4 and #9 of odd radio frames, and the PBCH is transmitted on subframe #0 of even radio frames. In Fig. 44, PSS-1 and PSS-2 are transmitted on subframes #0 and #4 of even radio frames, SSS-1 and SSS-2 are transmitted on subframes #0 and #4 of odd radio frames, and the PBCH is transmitted on subframe #9 of even radio frames. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #0 or subframe #9 of each radio frame (corresponding to the subframe transmission patterns of Figs. 43 and 44, respectively). If the overhead is to be reduced, the transmission density of PSS, SSS, and PBCH may be reduced in the same manner as in the exemplary embodiment 4-1, and repeated descriptions are omitted here.

### Exemplary Embodiment 7-4:

For FDD, when the number of subframes available for carrying the synchronization signal and the PBCH in the system is three, in the exemplary embodiment, the three subframes are subframes #4, #5, and #9. Fig. 45 is a schematic diagram illustrating positions of transmission subframes of PSS, SSS, and PBCH according to a thirty-fifth exemplary implementation of the present disclosure. Fig. 46 is a schematic diagram illustrating positions of transmission subframes of PSS, SSS, and PBCH according to a thirty-sixth exemplary implementation of the present disclosure. Figs. 45 and 46 are two schematic diagrams showing positions of the PSS, SSS and PBCH in transmission subframes satisfying the above positional relationships. In Fig. 45, PSS-1 and PSS-2 are transmitted on subframes #4 and #9 of even radio frames, SSS-1 and SSS-2 are transmitted on subframes #4 and #9 of odd radio frames, and the PBCH is transmitted on subframe #5 of odd radio frames. In Fig. 46, PSS-1 and PSS-2 are transmitted on subframes #5 and #9 of even radio frames, SSS-1 and SSS-2 are transmitted on subframes #5 and #9 of odd radio frames, and the PBCH is transmitted on subframe #4 of odd radio frames. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #5 or subframe #4 of each radio frame (corresponding to the subframe transmission patterns of Figs. 45 and 46, respectively). If the overhead is to be reduced, the transmission density of PSS, SSS, and PBCH may be reduced in the same manner as in the exemplary embodiment 4-1, and repeated descriptions are omitted here.

When the TDD system adopts one of Figs. 35 to 38 of the exemplary embodiment 6 as the transmission subframe pattern for transmitting the synchronization signal and the PBCH, the relative positions of the PSS and the SSS are separated by 5 subframes. In the FDD system, it is preferred that the relative positions of the PSS and the SSS are not separated by 5 subframes. In the exemplary embodiment 7, in the subframe transmission patterns of Figs. 40, 42, 44, and 46, the relative positions of the PSS and the SSS are separated by 6 subframes. Therefore, the 4 subframe transmission patterns are the preferred subframe transmission patterns in the FDD system.

### Exemplary Embodiment 8:

When the number of subframes available for carrying the synchronization signal and the PBCH in the system is three, and the synchronization signal occupies two subframes, the preset transmission sub frame pattern satisfies the following positional relationship:
two subframes occupied by the PSS are located in adjacent subframes;
two subframes occupied by the SSS are located in adjacent subframes;
the PSS and the SSS are located in subframes having the same subframe indexes in different radio frames; and
the PBCH and the SSS are located in non-adjacent subframes.

### Exemplary Embodiment 8-1:

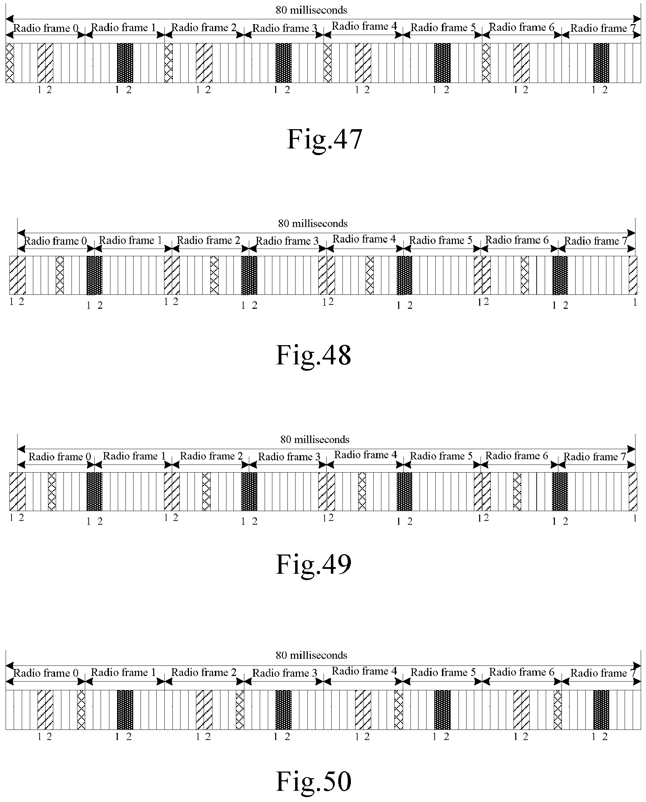

For FDD, when the number of subframes available for carrying the synchronization signal and the PBCH in the system is three, in the exemplary embodiment, the three subframes are subframes #0, #4, and #5. Fig. 47 is a schematic diagram illustrating positions of transmission subframes of PSS, SSS, and PBCH according to a thirty-seventh exemplary implementation of the present disclosure. Fig. 47 is a schematic diagram showing positions of the PSS, SSS and PBCH in transmission subframes satisfying the above positional relationships. In Fig. 47, PSS-1 and PSS-2 are transmitted on subframes #4 and #5 of even radio frames, SSS-1 and SSS-2 are transmitted on subframes #4 and #5 of odd radio frames, and the PBCH is transmitted on subframe #0 of even radio frames. In the exemplary embodiment, the transmission periods of the PSS, SSS and PBCH are all 20 milliseconds. Alternatively, the PBCH may be transmitted on subframe #0 of odd radio frames.

If the extreme coverage scenario is considered, the transmission density of the PBCH may be increased, and the PBCH may be transmitted on subframe #0 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 8-2:

For FDD, when the number of subframes available for carrying the synchronization signal and the PBCH in the system is three, in the exemplary embodiment, the three subframes are subframes #0, #5, and #9. Fig. 48 is a schematic diagram illustrating positions of transmission subframes of PSS, SSS, and PBCH according to a thirty-eighth exemplary implementation of the present disclosure. Fig. 48 is a schematic diagram showing positions of the PSS, SSS and PBCH in transmission subframes satisfying the above positional relationships. In Fig. 48, PSS-1 and PSS-2 are transmitted on subframe #0 of even radio frames and subframe #9 of odd radio frames, SSS-1 and SSS-2 are transmitted on subframe #0 of odd radio frames and subframe #9 of even radio frames, and the PBCH is transmitted on subframe #5 of even radio frames. In the exemplary embodiment, the transmission periods of the PSS, SSS and PBCH are all 20 milliseconds. Alternatively, the PBCH may be transmitted on subframe #5 of odd radio frames.

If the extreme coverage scenario is considered, the transmission density of the PBCH may be increased, and the PBCH may be transmitted on subframe #5 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 8-3:

For FDD, when the number of subframes available for carrying the synchronization signal and the PBCH in the system is three, in the exemplary embodiment, the three subframes are subframes #0, #4, and #9. Fig. 49 is a schematic diagram illustrating positions of transmission subframes of PSS, SSS, and PBCH according to a thirty-ninth exemplary implementation of the present disclosure. Fig. 49 is a schematic diagram showing positions of the PSS, SSS and PBCH in transmission subframes satisfying the above positional relationships. In Fig. 49, PSS-1 and PSS-2 are transmitted on subframe #0 of even radio frames and subframe #9 of odd radio frames, SSS-1 and SSS-2 arc transmitted on subframe #0 of odd radio frames and subframe #9 of even radio frames, and the PBCH is transmitted on subframe #4 of even radio frames. In the exemplary embodiment, the transmission periods of the PSS, SSS and PBCH are all 20 milliseconds. Alternatively, the PBCH may be transmitted on subframe #4 of odd radio frames.

If the extreme coverage scenario is considered, the transmission density of the PBCH may be increased, and the PBCH may be transmitted on subframe #4 of each radio frame.

If the overhead is to be reduced, the transmission density of PSS, SSS, and PBCH may be reduced in the same manner as in the exemplary embodiment 4-1, and repeated descriptions arc omitted here.

### Exemplary Embodiment 8-4:

For FDD, when the number of subframes available for carrying the synchronization signal and the PBCH in the system is three, in the exemplary embodiment, the three subframes are subframes #4, #5, and #9. Fig. 50 is a schematic diagram illustrating positions of transmission subframes of PSS, SSS, and PBCH according to a fortieth exemplary implementation of the present disclosure. Fig. 50 is a schematic diagram showing positions of the PSS, SSS and PBCH in transmission subframes satisfying the above positional relationships. In Fig. 49, PSS-1 and PSS-2 are transmitted on subframe #4 and subframe #5 of even radio frames, SSS-1 and SSS-2 are transmitted on subframe #4 and subframe #5 of odd radio frames, and the PBCH is transmitted on subframe #9 of even radio frames. In the exemplary embodiment, the transmission periods of the PSS, SSS and PBCH are all 20 milliseconds. Alternatively, the PBCH may be transmitted on subframe #9 of odd radio frames.

If the extreme coverage scenario is considered, the transmission density of the PBCH may be increased, and the PBCH may be transmitted on subframe #9 of each radio frame.

If the overhead is to be reduced, the transmission density of PSS, SSS, and PBCH may be reduced in the same manner as in the exemplary embodiment 4-1, and repeated descriptions are omitted here.

When the TDD system adopts one of Figs. 35 to 38 of the exemplary embodiment 6 as the transmission subframe pattern for transmitting the synchronization signal and the PBCH, the relative positions of the PSS and the SSS are separated by 5 subframes, and two PSSs or two SSSs arc separated by 5 subframes. In the FDD system as provided by this exemplary embodiment, PSS and SSS are adjacent to each other, both the interval between the PSS and the SSS, and the interval between two PSSs or two SSSs are different from that of the TDD system. Thus, the subframe transmission patterns in the exemplary embodiment may be used to distinguish from that of the TDD system.

### Exemplary Embodiment 9:

When the number of subframes available for carrying the synchronization signal and the PBCH in the system is three, and the PSS occupies two subframes and the SSS occupies one subframe, the preset transmission pattern satisfies the following positional relationship:
two subframes occupied by the PSS arc located in non-adjacent subframes; and
the PBCH and the SSS are located in adjacent subframes.

### Exemplary Embodiment 9-1:

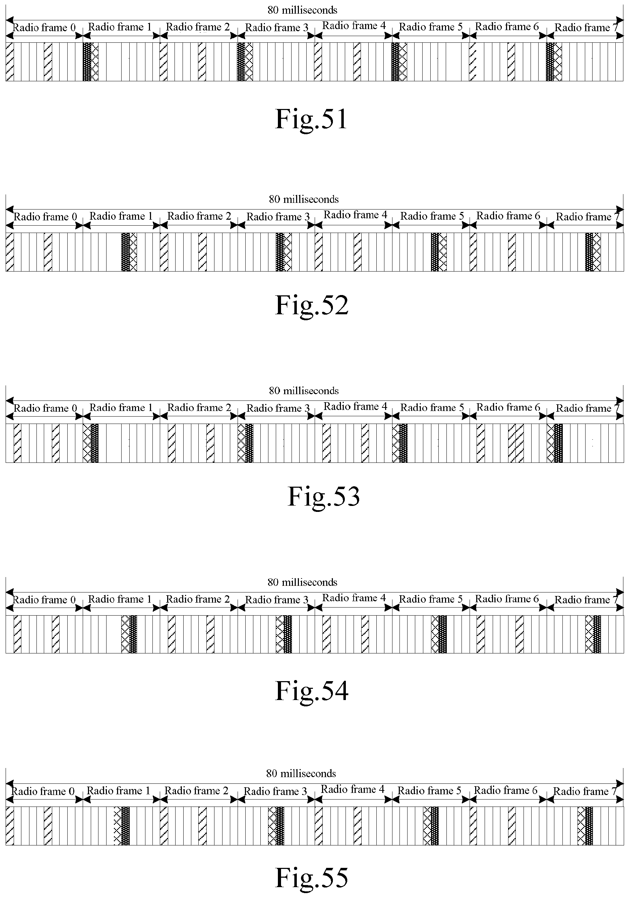

For TDD, when the number of subframes available for carrying the synchronization signal and the PBCH in the system is three, in the exemplary embodiment, the three subframes are subframes #0, #1, and #5. Fig. 51 is a schematic diagram illustrating positions of transmission subframes of PSS, SSS, and PBCH according to a forty-first exemplary implementation of the present disclosure. Fig. 51 is a schematic diagram showing positions of the PSS, SSS and PBCH in transmission subframes satisfying the above positional relationships. In Fig. 51, PSS-1 and PSS-2 are transmitted on subframe #0 and subframe #5 of even radio frames, and SSS and PBCH are transmitted on subframe #0 and subframe #1 of odd radio frames, respectively. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #1 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 9-2:

For TDD, when the number of subframes available for carrying the synchronization signal and the PBCH in the system is three, in the exemplary embodiment, the three subframes are subframes #0, #5, and #6. Fig. 52 is a schcmatic diagram illustrating positions of transmission subframes of PSS, SSS, and PBCH according to a forty-second exemplary implementation of the present disclosure. Fig. 52 is a schematic diagram showing positions of the PSS, SSS and PBCH in transmission subframes satisfying the above positional relationships. In Fig. 52, PSS-1 and PSS-2 are transmitted on subframe #0 and subframe #5 of even radio frames, and SSS and PBCH are transmitted on subframe #5 and subframe #6 of odd radio frames, respectively. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #6 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 9-3:

For TDD, when the number of subframes available for carrying the synchronization signal and the PBCH in the system is three, in the exemplary embodiment, the three subframes are subframes #0, #1, and #6. Fig. 53 is a schematic diagram illustrating positions of transmission subframes of PSS, SSS, and PBCH according to a forty-third exemplary implementation of the present disclosure. Fig. 53 is a schematic diagram showing positions of the PSS, SSS and PBCH in transmission subframes satisfying the above positional relationships. In Fig. 53, PSS-1 and PSS-2 are transmitted on subframe #1 and subframe #6 of even radio frames, and PBCH and SSS are transmitted on subframe #0 and subframe #1 of odd radio frames, respectively. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #0 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 9-4:

For TDD, when the number of subframes available for carrying the synchronization signal and the PBCH in the system is three, in the exemplary embodiment, the three subframes are subframes #1, #5, and #6. Fig. 54 is a schematic diagram illustrating positions of transmission subframes of PSS, SSS, and PBCH according to a forty-fourth exemplary implementation of the present disclosure. Fig. 54 is a schematic diagram showing positions of the PSS, SSS and PBCH in transmission subframes satisfying the above positional relationships. In Fig. 54, PSS-1 and PSS-2 are transmitted on subframe #1 and subframe #6 of even radio frames, and PBCH and SSS are transmitted on subframe #5 and subframe #6 of odd radio frames, respectively. In the exemplary embodiment, the transmission periods of the PSS, SSS and PBCH arc all 20 milliseconds.

If the extreme coverage scenario is considered, the transmission density of the PBCH may be increased, and the PBCH may be transmitted on subframe #5 of each radio frame.

If the overhead is to be reduced, the transmission density of PSS, SSS, and PBCH may be reduced in the same manner as in the exemplary embodiment 4-1, and repeated descriptions are omitted here.

### Exemplary Embodiment 10:

When the number of subframes available for carrying the synchronization signal and the PBCH in the system is three, and the PSS occupies two subframes and the SSS occupies one subframe, the preset transmission pattern satisfies the following positional relationship:
two subframes occupied by the PSS are located in non-adjacent subframes; and
the PBCH and the SSS are located in adjacent subframes.

### Exemplary Embodiment 10-1:

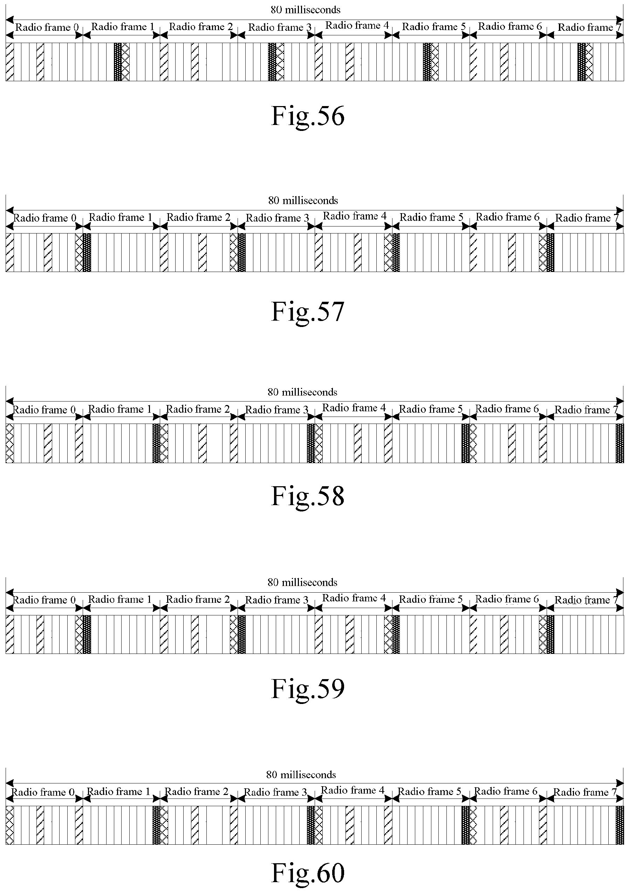

For FDD, when the number of subframes available for carrying the synchronization signal and the PBCH in the system is three, in the exemplary embodiment, the three subframes are subframes #0, #4, and #5. Fig. 55 is a schematic diagram illustrating positions of transmission subframes of PSS, SSS, and PBCH according to a forty-fifth exemplary implementation of the present disclosure. Fig. 56 is a schematic diagram illustrating positions of transmission subframes of PSS, SSS, and PBCH according to a forty-sixth exemplary implementation of the present disclosure. Figs. 55 and 56 are two schematic diagrams showing positions of the PSS, SSS and PBCH in transmission subframes satisfying the above positional relationships. In Fig. 55, PSS-1 and PSS-2 arc transmitted on subframe #0 and subframe #5 of even radio frames, and PBCH and SSS are transmitted on subframe #4 and subframe #5 of odd radio frames, respectively. In Fig. 56, PSS-1 and PSS-2 are transmitted on subframe #0 and subframe #4 of even radio frames, and SSS and PBCH are transmitted on subframe #4 and subframe #5 of odd radio frames, respectively. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #4 or subframe #5 of each radio frame (corresponding to the subframe transmission patterns of Figs. 55 and 56, respectively). If the overhead is to be reduced, the transmission density of PSS, SSS, and PBCH may be reduced in the same manner as in the exemplary embodiment 4-1, and repeated descriptions are omitted here.

### Exemplary Embodiment 10-2:

For FDD, when the number of subframes available for carrying the synchronization signal and the PBCH in the system is three, in the exemplary embodiment, the three subframes are subframes #0, #5, and #9. Fig. 57 is a schematic diagram illustrating positions of transmission subframes of PSS, SSS, and PBCH according to a forty-seventh exemplary implementation of the present disclosure. Fig. 58 is a schematic diagram illustrating positions of transmission subframes of PSS, SSS, and PBCH according to a forty-eighth exemplary implementation of the present disclosure. Figs. 57 and 58 are two schematic diagrams showing positions of the PSS, SSS and PBCH in transmission subframes satisfying the above positional relationships. In Fig. 57, PSS-1 and PSS-2 are transmitted on subframe #0 and subframe #5 of even radio frames, and PBCH and SSS are transmitted on subframe #9 of even radio frames and subframe #0 of odd radio frames, respectively. In Fig. 58, PSS-1 and PSS-2 are transmitted on subframe #5 and subframe #9 of even radio frames, and SSS and PBCH are transmitted on subframe #9 of odd radio frames and subframe #0 of even radio frames, respectively. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #9 or subframe #0 of each radio frame (corresponding to the subframe transmission patterns of Figs. 57 and 58, rcspcctivcly). If the overhead is to be reduced, the transmission density of PSS, SSS, and PBCH may be reduced in the same manner as in the exemplary embodiment 4-1, and repeated descriptions are omitted here.

### Exemplary Embodiment 10-3:

For FDD, when the number of subframes available for carrying the synchronization signal and the PBCH in the system is three, in the exemplary embodiment, the three subframes are subframes #0, #4, and #9. Fig. 59 is a schematic diagram illustrating positions of transmission subframes of PSS, SSS, and PBCH according to a forty-ninth exemplary implementation of the present disclosure. Fig. 60 is a schcmatic diagram illustrating positions of transmission subframes of PSS, SSS, and PBCH according to a fiftieth exemplary implementation of the present disclosure. Figs. 59 and 60 are two schematic diagrams showing positions of the PSS, SSS and PBCH in transmission subframes satisfying the above positional relationships. In Fig. 59, PSS-1 and PSS-2 are transmitted on subframe #0 and subframe #4 of even radio frames, and PBCH and SSS are transmitted on subframe #9 of even radio frames and subframe #0 of odd radio frames, respectively. In Fig. 60, PSS-1 and PSS-2 are transmitted on subframe #4 and subframe #9 of even radio frames, and SSS and PBCH are transmitted on subframe #9 of odd radio frames and subframe #0 of even radio frames, respectively. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #9 or subframe #0 of each radio frame (corresponding to the subframe transmission patterns of Figs. 59 and 60, respectively). If the overhead is to be reduced, the transmission density of PSS, SSS, and PBCH may be reduced in the same manner as in the exemplary embodiment 4-1, and repeated descriptions are omitted here.

### Exemplary Embodiment 10-4:

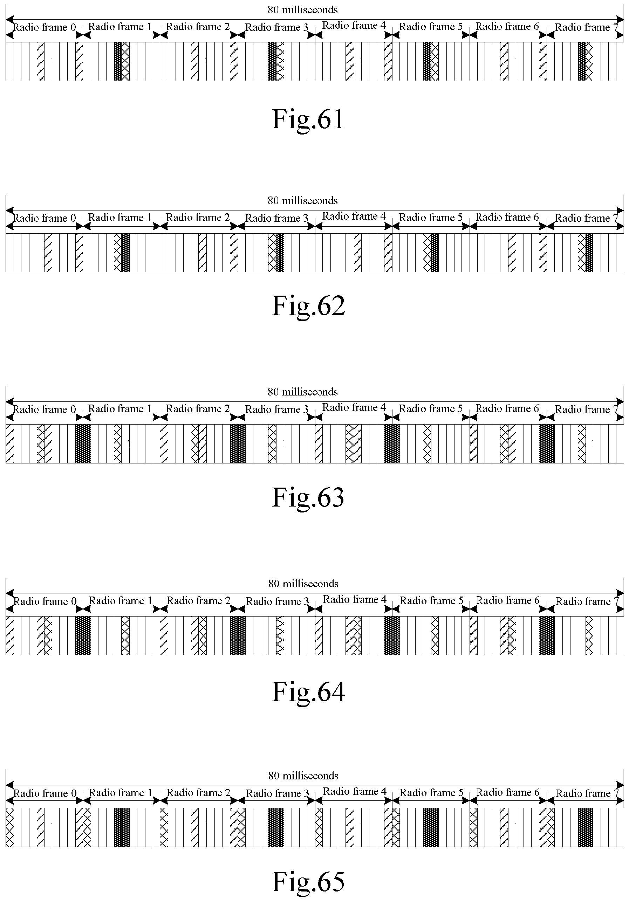

For FDD, when the number of subframes available for carrying the synchronization signal and the PBCH in the system is three, in the exemplary embodiment, the three subframes are subframes #4, #5, and #9. Fig. 61 is a schematic diagram illustrating positions of transmission subframes of PSS, SSS, and PBCH according to a fifty-first exemplary implementation of the present disclosure. Fig. 62 is a schematic diagram illustrating positions of transmission subframes of PSS, SSS, and PBCH according to a fifty-second exemplary implementation of the present disclosure. Figs. 61 and 62 are two schematic diagrams showing positions of the PSS, SSS and PBCH in transmission subframes satisfying the above positional relationships. In Fig. 61, PSS-1 and PSS-2 are transmitted on subframe #4 and subframe #9 of even radio frames, and SSS and PBCH are transmitted on subframe #9 and subframe #5 of odd radio frames, respectively. In Fig. 62, PSS-1 and PSS-2 are transmitted on subframe #5 and subframe #9 of even radio frames, and PBCH and SSS are transmitted on subframe #4 and subframe #5 of odd radio frames, respectively. In the exemplary embodiment, the transmission periods of the PSS, SSS and PBCH are all 20 milliseconds.

If the extreme coverage scenario is considered, the transmission density of the PBCH may be increased, and the PBCH may be transmitted on subframe #5 or subframe #4 of each radio frame (corresponding to the subframe transmission patterns of Figs. 61 and 62, respectively). If the overhead is to be reduced, the transmission density of PSS, SSS, and PBCH may be reduced in the same manner as in the exemplary embodiment 4-1, and repeated descriptions are omitted here.

For the Exemplary Embodiment 9 of the TDD system and the Exemplary Embodiment 10 of the FDD system, if the TDD system and the FDD system are to be distinguished by the relative positions of the PSS and the SSS, the preferred subframe transmission patterns of the TDD and FDD systems may be selected in accordance with the method mentioned in Exemplary Embodiment 7, and repeated descriptions are omitted here.

### Exemplary Embodiment 11:

When the number of subframes available for carrying the synchronization signal and the PBCH in the system is four, and the synchronization signal occupies two subframes, the preset transmission pattern satisfies the following positional relationship:
two subframes occupied by the PSS are located in non-adjacent subframes;
two subframes occupied by the SSS are located in adjacent subframes;
the PSS and the SSS occupy subframes having subframe indexes which are not completely the same; and
the PBCH and the SSS arc located in non-adjaccnt subframes.

### Exemplary Embodiment 11-1:

For FDD, when the number of subframes available for carrying the synchronization signal and the PBCH in the system is four, in the exemplary embodiment, the four subframes are subframes #0, #4, #5, and #9. Fig. 63 is a schematic diagram illustrating positions of transmission subframes of PSS, SSS, and PBCH according to a fifty-third exemplary implementation of the present disclosure. Fig. 63 is a schematic diagram showing positions of the PSS, SSS and PBCH in transmission subframes satisfying the above positional relationships. In Fig. 63, PSS-1 and PSS-2 are transmitted on subframe #0 and subframe #5 of even radio frames, SSS-1 and SSS-2 arc transmitted on subframe #9 of even radio frames and subframe #0 of odd radio frames, and PBCH is transmitted on subframe #4 of each radio frame. In the exemplary embodiment, the transmission periods of the PSS and SSS are all 20 milliseconds, and the transmission period of the PBCH is 10 milliseconds.

In the exemplary embodiment, the PBCH is transmitted on subframe #4 of each radio frame, which is only one of the exemplary embodiments. Since the subframes in the system which may carry the synchronization signal and the PBCH are subframes #0, #4, #5 and #9, the PBCH may be sent on any one of the above-mentioned subframes which is not used to transmit the PSS and SSS. If the extreme coverage scenario is considered, the transmission density of the PBCH may be increased, and the PBCH may be transmitted on one or more subframes which are not used to transmit the PSS and the SSS.

If the overhead is to be reduced, the transmission density of PSS, SSS, and PBCH may be reduced in the same manner as in the exemplary embodiment 4-1, and repeated descriptions are omitted here.

### Exemplary Embodiment 11-2:

For FDD, when the number of subframes available for carrying the synchronization signal and the PBCH in the system is four, in the exemplary embodiment, the four subframes are subframes #0, #4, #5, and #9. Fig. 64 is a schematic diagram illustrating positions of transmission subframes of PSS, SSS, and PBCH according to a fifty-fourth exemplary implementation of the present disclosure. Fig. 64 is a schematic diagram showing positions of the PSS, SSS and PBCH in transmission subframes satisfying the above positional relationships. In Fig. 64, PSS-1 and PSS-2 arc transmitted on subframe #0 and subframe #4 of even radio frames, SSS-1 and SSS-2 are respectively transmitted on subframe #9 of even radio frames and subframe #0 of odd radio frames, and PBCH is transmitted on subframe #5 of each radio frame. In the exemplary embodiment, the transmission periods of the PSS, SSS are both 20 milliseconds.

In the exemplary embodiment, the PBCH is transmitted on subframe #5 of odd radio frame, which is only one of the exemplary embodiments. Since the subframes in the system which may carry the synchronization signal and the PBCH are subframes #0, #4, #5 and #9, the PBCH may be sent on any one of the above-mentioned subframes which is not used to transmit the PSS and SSS. If the extreme coverage scenario is considered, the transmission density of the PBCH may be increased, and the PBCH may be transmitted on one or more subframes which are not used to transmit the PSS and the SSS.

If the overhead is to be reduced, the transmission density of PSS, SSS, and PBCH may be reduced in the same manner as in the exemplary embodiment 4-1, and repeated descriptions are omitted here.

According to the design idea of this Exemplary Embodiment, other subframe transmission patterns may also be obtained. For example, PSS-1 and PSS-2 may be transmitted on subframes #4 and #9 of even radio frames, SSS-1 and SSS-2 are respectively transmitted on subframe #4 and subframe #5 of odd radio frames, and PBCH is transmitted on subframe #0 of each radio frame, and finally a subframe transmission pattern as shown in Fig. 65 may be obtained. Fig. 65 is a schematic diagram illustrating positions of transmission subframes of PSS, SSS, and PBCH according to a fifty-fifth exemplary implementation of the present disclosure. Repeated descriptions are omitted here.

### Exemplary Embodiment 12:

When the number of subframes available for carrying the synchronization signal and the PBCH in the system is four, and the synchronization signal occupies two subframes, the preset transmission subframe pattern satisfies the following positional relationship:
two subframes occupied by the PSS are located in adjacent subframes;
two subframes occupied by the SSS are located in adjacent subframes;
the two subframes occupied by the PSS and the SSS have subframe indexes which are not completely the same; and
the PBCH and the SSS are located in non-adjacent subframes.

### Exemplary Embodiment 12-1:

For FDD, when the number of subframes available for carrying the synchronization signal and the PBCH in the system is four, in the exemplary embodiment, the four subframes are subframes #0, #4, #5, and #9. Fig. 66 is a schematic diagram illustrating positions of transmission subframes of PSS, SSS, and PBCH according to a fifty-sixth exemplary implementation of the present disclosure. Fig. 66 is a schematic diagram showing positions of the PSS, SSS and PBCH in transmission subframes satisfying the above positional relationships. In Fig. 66, PSS-1 and PSS-2 arc transmitted on subframe #4 and subframe #5 of even radio frames, SSS-1 and SSS-2 are respectively transmitted on subframe #9 of even radio frames and subframe #0 of odd radio frames, and PBCH is transmitted on subframe #0 of even radio frame. In the exemplary embodiment, the transmission periods of the PSS, SSS and PBCH are all 20 milliseconds.

In the exemplary embodiment, the PBCH is transmitted on subframe #0 of even radio frame, which is only one of the exemplary embodiments. Since the subframes in the system which may carry the synchronization signal and the PBCH are subframes #0, #4, #5 and #9, the PBCH may be sent on any one of the above-mentioned subframes which is not used to transmit the PSS and SSS. If the extreme coverage scenario is considered, the transmission density of the PBCH may be increased, and the PBCH may be transmitted on one or more subframes which are not used to transmit the PSS and the SSS.

If the overhead is to be reduced, the transmission density of PSS, SSS, and PBCH may be reduced in the same manner as in the exemplary embodiment 4-1, and repeated descriptions are omitted here.

### Exemplary Embodiment 12-2:

For FDD, when the number of subframes available for carrying the synchronization signal and the PBCH in the system is four, in the exemplary embodiment, the four subframes are subframes #0, #4, #5, and #9. Fig. 67 is a schematic diagram illustrating positions of transmission subframes of PSS, SSS, and PBCH according to a fifty-seventh exemplary implementation of the present disclosure. Fig. 67 is a schematic diagram showing positions of the PSS, SSS and PBCH in transmission subframes satisfying the above positional relationships. In Fig. 67, PSS-1 and PSS-2 are transmitted on subframe #9 of odd radio frames and subframe #0 of even radio frames, SSS-1 and SSS-2 are transmitted on subframes #4 and #4 of even radio frame respectively, and PBCH is transmitted on subframe #0 of odd radio frames. In the exemplary embodiment, the transmission periods of the PSS, SSS and PBCH are all 20 milliseconds.

In the exemplary embodiment, the PBCH is transmitted on subframe #0 of odd radio frames, which is only one of the exemplary embodiments. Since the subframes in the system which may carry the synchronization signal and the PBCH are subframes #0, #4, #5 and #9, the PBCH may be sent on any one of the above-mentioned subframes which is not used to transmit the PSS and SSS. If the extreme coverage scenario is considered, the transmission density of the PBCH may be increased, and the PBCH may be transmitted on one or more subframes which are not used to transmit the PSS and the SSS.

If the overhead is to be reduced, the transmission density of PSS, SSS, and PBCH may be reduced in the same manner as in the exemplary embodiment 4-1, and repeated descriptions are omitted here.

According to the design idea of this Exemplary Embodiment, other transmission subframe patterns may also be obtained, and repeated descriptions are omitted here.

### Exemplary Embodiment 13:

When the number of subframes available for carrying the synchronization signal and the PBCH in the system is four, and the PSS occupies two subframes and the SSS occupies one subframe, the preset transmission subframe pattern satisfies the following positional relationship:
two subframes occupied by the PSS are located in adjacent subframes; and
the PBCH and the SSS are located in adjacent subframes.

For FDD, when the number of subframes available for carrying the synchronization signal and the PBCH in the system is four, in the exemplary embodiment, the four subframes are subframes #0, #4, #5, and #9. Fig. 68 is a schematic diagram illustrating positions of transmission subframes of PSS, SSS, and PBCH according to a fifty-eighth exemplary implementation of the present disclosure. Fig. 68 is a schematic diagram showing positions of the PSS, SSS and PBCH in transmission subframes satisfying the above positional relationships. In Fig. 68, PSS-1 and PSS-2 are transmitted on subframe #4 and subframe #5 of each radio frame, PBCH and SSS are transmitted on subframes #0 and #9 of even radio frame. In the exemplary embodiment, the transmission periods of the PSS, SSS and PBCH are all 10 milliseconds. Further, the positions of the transmission subframes of the PBCH and SSS may be interchanged.

If the overhead is to be reduced, the transmission density of PSS, SSS, and PBCH may be reduced in the same manner as in the exemplary embodiment 4-1, and repeated descriptions are omitted here.

According to the design idea of this Exemplary Embodiment, other transmission subframe patterns may also be obtained, and repeated descriptions are omitted here.

### Exemplary Embodiment 14:

In the narrowband LTE system, in the current operation hypothesis, three operation modes are defined:
Mode 1: stand-alone operation mode;
Mode 2: in-band operation mode; and
Mode 3: guard band operation mode.

For the design of the synchronization signal, since the terminal does not have any system-related information when detecting the synchronization signal, the design of the synchronization signal needs to be the same in all three operation modes. For the resource mapping of synchronization signals, a current working hypothesis is that the first three OFDM symbols of a subframe are not used for transmission of a synchronization signal. This mainly considers coexistence with the traditional LTE system in the in-band operation mode. The first three OFDM symbols of the downlink subframe of the LTE system are used to send downlink control information. This working hypothesis also applies to the stand-alone operation mode and the guard band operation mode. For the guard band operation mode or the stand-alone operation mode, no downlink control information of the LTE system needs to be transmitted. Therefore, for the subframes that transmit synchronization signals, if the first three OFDMs are not used to transmit other signals, this will become a waste of resources. Therefore, in order to fully utilize resources and improve the coverage of the physical broadcast channcl, the physical broadcast channel may be transmitted using the first three OFDM symbols of the subframes that transmit the synchronization signals (including PSS and SSS).

Specifically, assuming that within 80 milliseconds, there are N subframes for transmitting the PSS and there are M subframes for transmitting the SSS, then there are a total of 3(N+M) idle OFDM symbols in a subframe for transmitting the synchronization signal. Assuming that the PBCH occupies K OFDM symbols, then the synchronization signal subframe may carry _{└}3(*N* + *M*)/*K*_{┘} PBCHs within 80 milliseconds. Table 1 shows the number of PBCHs that may be carried by the remaining symbols of subframes that send synchronization signals under different candidate values of M, N.

**Table 1**

| N | M | 3(M+N) | _{└}3(*N* + *M*)/ *K*_{┘} Assuming K=9/11 |
|---|---|---|---|
| 8 | 8 | 48 | 5/4 |
| 8 | 4 | 36 | 4/3 |
| 4 | 4 | 24 | 2/2 |
| 4 | 2 | 18 | 2/1 |

Sending the PBCH on the remaining OFDM symbols of the subframe in which the synchronization signal is transmitted may reduce the overhead of the PBCH or increase the coverage of the PBCH.

Alternatively, when the synchronization signal has a relatively high transmission density in 80 milliseconds, the base station may indicate the operation mode through the transmission position of the PBCH, which is specifically as follows.

When the operation mode is the in-band operation mode, the PBCH is sent on the PBCH subframe in the above embodiment. When the operation mode is the stand-alone operation mode, the PBCH is sent in the first three OFDM symbols of the PSS subframe in the above embodiment. When the operation mode is the guard band operation mode, the PBCH is transmitted in the first three OFDM symbols of the SSS subframe in the above embodiment. Alternatively, when the operation mode is the in-band operation mode, the PBCH is sent on the PBCH subframe in the above embodiment. When the operation mode is the stand-alone operation mode, the PBCH is sent in the first three OFDM symbols of the SSS subframe in the above embodiment. When the operation mode is the guard band operation mode, the PBCH is transmitted in the first three OFDM symbols of the PSS subframe in the above embodiment.

After completing the synchronization signal detection, the terminal performs PBCH blind detection based on different PBCH location hypotheses. When the PBCH is detected, the operation mode may be determined according to the location of the detected PBCH. The above method is suitable for scenarios where the transmission density of PSS and SSS is relatively high.

### Exemplary Embodiment 15:

The Exemplary Embodiment 14 shows that different operation modes are distinguished by the manner in which the first three OFDM symbols of the PSS and the SSS carry the PBCH. Another way may be that the operation modes of the narrowband system may be indicated by the transmission periods of the PSS/SSS/PBCH and/or the positions of the PSS/SSS/PBCH within a period. An exemplary embodiment may be as follows.
When the operation mode is the in-band operation mode, the transmission period of PSS/SSS/PBCH is 10 milliseconds;
when the operation mode is the guard band operation mode, the transmission period of the PSS/SSS/PBCH is 20 milliseconds;
when the operation mode is the stand-alone operation mode, the transmission period of the PSS/SSS/PBCH is 40 milliseconds.

In fact, in the above-mentioned Exemplary Embodiments, three different transmission subframe patterns are selected to indicate different operation modes, respectively, and the terminal performs synchronization signal and PBCH detection on the three different transmission subframe patterns to determine the operation mode of the system.

### Exemplary Embodiment 16:

In the foregoing Exemplary Embodiment, it is mentioned that in the existing LTE system, the duplex mode of the system is distinguished by the relative positions of the PSS and the SSS. In the narrowband LTE system, in addition to the manner of distinguishing the duplex mode of the system by the relative positions of the PSS and the SSS, if the PSS occupies 2 subframes, the duplex mode may also be distinguished by a relative spacing (or interval) between the two PSSs.

In the above Exemplary Embodiments, it can be seen that the subframes occupied by the two PSSs in the TDD system are separated by 5 subframes, and in the FDD system, the subframes occupied the two PSSs may be adjacent to each other, or may be separated by 4 subframes or 5 subframes. Therefore, the current duplex mode of the system which the terminal resides in may be indicated by the relative spacing of the two PSSs.

Specifically, in a TDD system, subframes occupied by two PSSs are separated by 5 subframes; and in an FDD system, subframes occupied by two PSSs are adjacent or separated by 4 subframes.

When the terminal performs PSS detection, the relative position of the two PSSs may be used to determine the duplex mode of the current system.

When the relative positions of the two detected PSSs are separated by 5 subframes, the terminal determines that the current system duplex mode is TDD.

When the relative positions of the two detected PSSs are adjacent or separated by 4 subframes, the terminal determines that the current system duplex mode is FDD.

Through the description of the above embodiments, those skilled in the art can clearly understand that the method according to the above embodiments can be implemented by means of software plus a necessary general hardware platform. The hardware can also be used, but in many cases, the former is better implementation. Based on this understanding, the essence or the part that contributes to the prior art of technical solutions of the present disclosure can be embodied in the form of a software product. The computer software product is stored in a storage medium (such as ROM/RAM, magnetic disk, optical disc), including instructions for enabling a terminal device (which may be a mobile phone, a computer, a server, or a network device, etc.) to perform the methods described in the various embodiments of the present disclosure.

It should be noted that the above modules may be implemented by software or hardware. For the latter, it may be implemented by, but not limited to, the following manner: the above modules are all located in the same processor; or the above modules are located in multiple processors.

An embodiment of the present disclosure also provides a storage medium. Optionally, in the embodiment, the above storage medium may be configured to store program codes for executing the following steps:
S1: determining a preset transmission subframe pattern;
S2: periodically transmitting, by a base station, a synchronization signal and a Physical Broadcast Channel PBCH to a terminal according to the preset transmission subframe pattern, wherein the synchronization signal includes a primary synchronization signal PSS and a secondary synchronization signal SSS.

Optionally, in this embodiment, the foregoing storage medium may include but is not limited to a U disk, a Read-Only Memory (ROM), a Random Access Memory (RAM), a mobile hard disk, and a magnetic disk, an optical disc or other medium that can store program codes. Optionally, in this embodiment, the processor executes the program codes stored in the storage medium to perform the method steps in the above embodiments.

Optionally, specific examples for this embodiment can be found in the descriptions regarding the above embodiments and exemplary implementations, and repeated descriptions are omitted here.

Obviously, those skilled in the art should understand that each module or step of the present disclosure described above may be implemented by general-purpose computing device(s), which can be concentrated on a single computing device or distributed over a network of multiple computing devices. Optionally, the modules or steps may be implemented with program codes that are executable by the computing device(s) so that they may be stored in the storage device to be executed by the computing device(s). In some cases, the illustrated or described steps may performed in an order different from that described herein, or they may be separately fabricated into individual integrated circuit modules, or some of the modules or steps described herein may be implemented as a single integrated circuit module. Thus, the present disclosure is not limited to any specific combination of hardware and software.

### Industrial applicability

In embodiments of the present disclosure, the base station periodically transmits a synchronization signal and a Physical Broadcast Channel PBCH to a terminal according to a preset transmission subframe pattern, the synchronization signal includes a primary synchronization signal PSS and a secondary synchronization signal SSS, and the transmission subframe pattern indicates a position of a transmission subframe for transmitting the synchronization signal and the PBCH in a plurality of radio frames within a predetermined period of time. The present disclosure can solve the problem in the narrowband system of LTE that the designs of the synchronization signal and the physical broadcast channel are not unreasonable, thus realizing reasonable transmission of the synchronization signal and the physical broadcast channel in the narrowband system.

## Claims

1. A synchronization signal transmission method, comprising:
periodically transmitting (S 104), by a base station, a synchronization signal and a Physical Broadcast Channel, PBCH, to a terminal according to a preset transmission subframe pattern, wherein the synchronization signal comprises a primary synchronization signal, PSS, and a secondary synchronization signal, SSS, and the transmission subframe pattern indicates positions of transmission subframes of the synchronization signal and the PBCH in a plurality of radio frames within a predetermined period of time, wherein
in each of the plurality of radio frames, the PSS is transmitted on a first subframe, the SSS is transmitted on a second subframe, and the PBCH is transmitted on a third subframe, wherein the first subframe and the second subframe are not adjacent, and the second subframe and the third subframe are adjacent;
for a Time Division Duplex, TDD, system, the first subframe, the second subframe, and the third subframe are selected from: a subframe #0, a subframe #1, a subframe #5, and a subframe #6, and indexes of the subframes are the indexes of the subframes within one radio frame, starting from #0;
for a Frequency Division Duplex, FDD, system, the first subframe, the second subframe, and the third subframe are selected from: a subframe #0, a subframe #4, a subframe #5, and a subframe #9, and indexes of the subframes are the indexes of the subframes within one radio frame, starting from #0; and **characterized in that**,
in response to the PSS being transmitted on a normal subframe, the PSS is transmitted on all Orthogonal Frequency Division Multiplexing, OFDM, symbols of the normal subframe except OFDM symbols occupied by a downlink control area;
in response to the SSS being transmitted on a normal subframe, the SSS is transmitted on all OFDM symbols of the normal subframe except OFDM symbols occupied by a downlink control area.

2. . The method according to claim 1, wherein the transmission subframe pattern is determined according to the number of subframes available for carrying the synchronization signal and the PBCH in one radio frame of a system.

3. . A synchronization signal transmission device, located in a base station, comprising:
a transmission module (24) configured to periodically transmit a synchronization signal and a Physical Broadcast Channel PBCH to a terminal according to a preset transmission subframe pattern, wherein the synchronization signal comprises a primary synchronization signal PSS and a secondary synchronization signal SSS, and the transmission subframe pattern indicates positions of transmission subframes of the synchronization signal and the PBCH in a plurality of radio frames within a predetermined period of time,
in each of the plurality of radio frames, the PSS is transmitted on a first subframe, the SSS is transmitted on a second subframe, and the PBCH is transmitted on a third subframe, wherein the first subframe and the second subframe are not adjacent, and the second subframe and the third subframe are adjacent;
for a Time Division Duplex, TDD, system, the first subframe, the second subframe, and the third subframe are selected from: a subframe #0, a subframe #1, a subframe #5, and a subframe #6, and indexes of the subframes are the indexes of the subframes within one radio frame, starting from #0;
for a Frequency Division Duplex, FDD, system, the first subframe, the second subframe, and the third subframe are selected from: a subframe #0, a subframe #4, a subframe #5, and a subframe #9, and indexes of the subframes are the indexes of the subframes within one radio frame, starting from #0; and **characterized in that**,
in response to the PSS being transmitted on a normal subframe, the PSS is transmitted on all Orthogonal Frequency Division Multiplexing, OFDM, symbols of the normal subframe except OFDM symbols occupied by a downlink control area;
in response to the SSS being transmitted on a normal subframe, the SSS is transmitted on all OFDM symbols of the normal subframe except OFDM symbols occupied by a downlink control area.

4. A synchronization signal transmission system, comprising:
a base station; and
a terminal;
wherein:
the base station periodically transmits (S104) a synchronization signal and a Physical Broadcast Channel PBCH to a terminal according to a preset transmission subframe pattern, wherein the synchronization signal comprises a primary synchronization signal PSS and a secondary synchronization signal SSS, and the transmission subframe pattern indicates positions of transmission subframes of the synchronization signal and the PBCH in a plurality of radio frames within a predetermined period of time; and
the terminal periodically and repeatedly receives the synchronization signal and the PBCH,
in each of the plurality of radio frames, the PSS is transmitted on a first subframe, the SSS is transmitted on a second subframe, and the PBCH is transmitted on a third subframe, wherein the first subframe and the second subframe are not adjacent, and the second subframe and the third subframe are adjacent;
for a Time Division Duplex, TDD, system, the first subframe, the second subframe, and the third subframe are selected from: a subframe #0, a subframe #1, a subframe #5, and a subframe #6, and indexes of the subframes are the indexes of the subframes within one radio frame, starting from #0;
for a Frequency Division Duplex, FDD, system, the first subframe, the second subframe, and the third subframe are selected from: a subframe #0, a subframe #4, a subframe #5, and a subframe #9, and indexes of the subframes are the indexes of the subframes within one radio frame, starting from #0; and **characterized in that**,
in response to the PSS being transmitted on a normal subframe, the PSS is transmitted on all Orthogonal Frequency Division Multiplexing, OFDM, symbols of the normal subframe except OFDM symbols occupied by a downlink control area;
in response to the SSS being transmitted on a normal subframe, the SSS is transmitted on all OFDM symbols of the normal subframe except OFDM symbols occupied by a downlink control area.

## Patentansprüche

1. Verfahren zur Übertragung von Synchronisationssignalen, umfassend:
periodisches Übertragen (S104) eines Synchronisationssignals und eines Physical Broadcast Channel, PBCH, durch eine Basisstation an ein Endgerät gemäß einem voreingestellten Übertragungsteilrahmenmuster, wobei das Synchronisationssignal ein primäres Synchronisationssignal, PSS, und ein sekundäres Synchronisationssignal, SSS, umfasst und das Übertragungsteilrahmenmuster Positionen von Übertragungsteilrahmen des Synchronisationssignals und des PBCH in einer Vielzahl von Funkrahmen innerhalb einer vorbestimmten Zeitspanne angibt, wobei
in jedem der Vielzahl von Funkrahmen das PSS auf einem ersten Teilrahmen übertragen wird, das SSS auf einem zweiten Teilrahmen übertragen wird und der PBCH auf einem dritten Teilrahmen übertragen wird, wobei der erste Teilrahmen und der zweite Teilrahmen nicht benachbart sind und der zweite Teilrahmen und der dritte Teilrahmen benachbart sind;
bei einem Time-Division-Duplex-, TDD-, System der erste Teilrahmen, der zweite Teilrahmen und der dritte Teilrahmen ausgewählt werden aus: einem Teilrahmen #0, einem Teilrahmen #1, einem Teilrahmen #5 und einem Teilrahmen #6, und Indizes der Teilrahmen die Indizes der Teilrahmen innerhalb eines Funkrahmens sind, beginnend mit #0;
bei einem Frequency-Division-Duplex-, FDD-, System der erste Teilrahmen, der zweite Teilrahmen und der dritte Teilrahmen ausgewählt werden aus: einem Teilrahmen #0, einem Teilrahmen #4, einem Teilrahmen #5 und einem Teilrahmen #9, und Indizes der Teilrahmen die Indizes der Teilrahmen innerhalb eines Funkrahmens sind, beginnend mit #0; und **dadurch gekennzeichnet, dass**
als Reaktion auf die Übertragung des PSS in einem normalen Teilrahmen das PSS in allen Orthogonal-Frequency-Division-Multiplexing-, OFDM-, Symbolen des normalen Teilrahmens mit Ausnahme der OFDM-Symbole übertragen wird, die von einem Downlink-Steuerbereich belegt sind;
als Reaktion auf die Übertragung des SSS in einem normalen Teilrahmen das SSS in allen OFDM-Symbolen des normalen Teilrahmens mit Ausnahme der OFDM-Symbole übertragen wird, die von einem Downlink-Steuerbereich belegt sind.

2. Verfahren nach Anspruch 1, wobei das Übertragungsteilrahmenmuster entsprechend der Anzahl von Teilrahmen bestimmt wird, die für das Führen des Synchronisationssignals und des PBCH in einem Funkrahmen eines Systems verfügbar sind.

3. Vorrichtung zur Übertragung von Synchronisationssignalen, die sich in einer Basisstation befindet und Folgendes umfasst:
ein Übertragungsmodul (24), das konfiguriert ist zum periodischen Übertragen eines Synchronisationssignals und eines Physical Broadcast Channel, PBCH, an ein Endgerät gemäß einem voreingestellten Übertragungsteilrahmenmuster, wobei das Synchronisationssignal ein primäres Synchronisationssignal, PSS, und ein sekundäres Synchronisationssignal, SSS, umfasst und das Übertragungsteilrahmenmuster Positionen von Übertragungsteilrahmen des Synchronisationssignals und des PBCH in einer Vielzahl von Funkrahmen innerhalb einer vorbestimmten Zeitspanne angibt,
in jedem der Vielzahl von Funkrahmen das PSS auf einem ersten Teilrahmen übertragen wird, das SSS auf einem zweiten Teilrahmen übertragen wird und der PBCH auf einem dritten Teilrahmen übertragen wird, wobei der erste Teilrahmen und der zweite Teilrahmen nicht benachbart sind und der zweite Teilrahmen und der dritte Teilrahmen benachbart sind;
bei einem Time-Division-Duplex-, TDD-, System der erste Teilrahmen, der zweite Teilrahmen und der dritte Teilrahmen ausgewählt werden aus: einem Teilrahmen #0, einem Teilrahmen #1, einem Teilrahmen #5 und einem Teilrahmen #6, und Indizes der Teilrahmen die Indizes der Teilrahmen innerhalb eines Funkrahmens sind, beginnend mit #0;
bei einem Frequency-Division-Duplex-, FDD-, System der erste Teilrahmen, der zweite Teilrahmen und der dritte Teilrahmen ausgewählt werden aus: einem Teilrahmen #0, einem Teilrahmen #4, einem Teilrahmen #5 und einem Teilrahmen #9, und Indizes der Teilrahmen die Indizes der Teilrahmen innerhalb eines Funkrahmens sind, beginnend mit #0; und **dadurch gekennzeichnet, dass**
als Reaktion auf die Übertragung des PSS in einem normalen Teilrahmen das PSS in allen Orthogonal-Frequency-Division-Multiplexing-, OFDM-, Symbolen des normalen Teilrahmens mit Ausnahme der OFDM-Symbole übertragen wird, die von einem Downlink-Steuerbereich belegt sind;
als Reaktion auf die Übertragung des SSS in einem normalen Teilrahmen das SSS in allen OFDM-Symbolen des normalen Teilrahmens mit Ausnahme der OFDM-Symbole übertragen wird, die von einem Downlink-Steuerbereich belegt sind.

4. System zur Übertragung von Synchronisationssignalen, umfassend:
eine Basisstation; und
ein Endgerät;
wobei:
die Basisstation periodisch ein Synchronisationssignal und einen Physical Broadcast Channel, PBCH, an ein Endgerät gemäß einem voreingestellten Übertragungsteilrahmenmuster überträgt (S104), wobei das Synchronisationssignal ein primäres Synchronisationssignal, PSS, und ein sekundäres Synchronisationssignal, SSS, umfasst und das Übertragungsteilrahmenmuster Positionen von Übertragungsteilrahmen des Synchronisationssignals und des PBCH in einer Vielzahl von Funkrahmen innerhalb einer vorbestimmten Zeitspanne angibt; und
das Endgerät periodisch und wiederholt das Synchronisationssignal und den PBCH empfängt, in jedem der Vielzahl von Funkrahmen das PSS auf einem ersten Teilrahmen übertragen wird, das SSS auf einem zweiten Teilrahmen übertragen wird und der PBCH auf einem dritten Teilrahmen übertragen wird, wobei der erste Teilrahmen und der zweite Teilrahmen nicht benachbart sind und der zweite Teilrahmen und der dritte Teilrahmen benachbart sind;
bei einem Time-Division-Duplex-, TDD-, System der erste Teilrahmen, der zweite Teilrahmen und der dritte Teilrahmen ausgewählt werden aus: einem Teilrahmen #0, einem Teilrahmen #1, einem Teilrahmen #5 und einem Teilrahmen #6, und Indizes der Teilrahmen die Indizes der Teilrahmen innerhalb eines Funkrahmens sind, beginnend mit #0;
bei einem Frequency-Division-Duplex-, FDD-, System der erste Teilrahmen, der zweite Teilrahmen und der dritte Teilrahmen ausgewählt werden aus: einem Teilrahmen #0, einem Teilrahmen #4, einem Teilrahmen #5 und einem Teilrahmen #9, und Indizes der Teilrahmen die Indizes der Teilrahmen innerhalb eines Funkrahmens sind, beginnend mit #0; und **dadurch gekennzeichnet, dass**
als Reaktion auf die Übertragung des PSS in einem normalen Teilrahmen das PSS in allen Orthogonal-Frequency-Division-Multiplexing-, OFDM-, Symbolen des normalen Teilrahmens mit Ausnahme der OFDM-Symbole übertragen wird, die von einem Downlink-Steuerbereich belegt sind;
als Reaktion auf die Übertragung des SSS in einem normalen Teilrahmen das SSS in allen OFDM-Symbolen des normalen Teilrahmens mit Ausnahme der OFDM-Symbole übertragen wird, die von einem Downlink-Steuerbereich belegt sind.

## Revendications

1. Procédé d'émission de signal de synchronisation, comprenant :
l'émission périodique (S104), par une station de base, d'un signal de synchronisation et d'un canal physique de diffusion, PBCH, vers un terminal selon un modèle de sous-trame d'émission prédéfini, dans lequel le signal de synchronisation comprend un signal de synchronisation primaire, PSS, et un signal de synchronisation secondaire, SSS, et le modèle de sous-trame d'émission indique des positions de sous-trames d'émission du signal de synchronisation et du PBCH dans une pluralité de trames radio au sein d'une période de temps prédéterminée, dans lequel
dans chacune de la pluralité de trames radio, le PSS est émis sur une première sous-trame, le SSS est émis sur une deuxième sous-trame et le PBCH est émis sur une troisième sous-trame, dans lequel la première sous-trame et la deuxième sous-trame ne sont pas adjacentes, et la deuxième sous-trame et la troisième sous-trame sont adjacentes ;
pour un système duplex à répartition dans le temps, TDD, la première sous-trame, la deuxième sous-trame et la troisième sous-trame sont sélectionnées parmi : une sous-trame #0, une sous-trame #1, une sous-trame #5 et une sous-trame #6, et des indices des sous-trames sont les indices des sous-trames au sein d'une trame radio, en partant du #0 ;
pour un système duplex à répartition en fréquence, FDD, la première sous-trame, la deuxième sous-trame et la troisième sous-trame sont sélectionnées parmi : une sous-trame #0, une sous-trame #4, une sous-trame #5 et une sous-trame #9, et des indices des sous-trames sont les indices des sous-trames au sein d'une trame radio, en partant du #0 ; et **caractérisé en ce que**,
en réponse au PSS émis sur une sous-trame normale, le PSS est émis sur l'ensemble des symboles de multiplexage par répartition orthogonale de la fréquence, OFDM, de la sous-trame normale, à l'exception des symboles OFDM occupés par une zone de commande de liaison descendante ;
en réponse au SSS émis sur une sous-trame normale, le SSS est émis sur l'ensemble des symboles OFDM, de la sous-trame normale, à l'exception des symboles OFDM occupés par une zone de commande de liaison descendante.

2. Procédé selon la revendication 1, dans lequel le modèle de sous-trame d'émission est déterminé selon le nombre de sous-trames disponibles pour porter le signal de synchronisation et le PBCH dans une trame radio d'un système.

3. Dispositif d'émission de signal de synchronisation, situé dans une station de base, comprenant :
un module d'émission (24) configuré pour émettre périodiquement un signal de synchronisation et un canal physique de diffusion, PBCH, vers un terminal selon un modèle de sous-trame d'émission prédéfini, dans lequel le signal de synchronisation comprend un signal de synchronisation primaire PSS et un signal de synchronisation secondaire SSS, et le modèle de sous-trame d'émission indique des positions de sous-trames d'émission du signal de synchronisation et du PBCH dans une pluralité de trames radio au sein d'une période de temps prédéterminée,
dans chacune de la pluralité de trames radio, le PSS est émis sur une première sous-trame, le SSS est émis sur une deuxième sous-trame et le PBCH est émis sur une troisième sous-trame, dans lequel la première sous-trame et la deuxième sous-trame ne sont pas adjacentes, et la deuxième sous-trame et la troisième sous-trame sont adjacentes ;
pour un système duplex à répartition dans le temps, TDD, la première sous-trame, la deuxième sous-trame et la troisième sous-trame sont sélectionnées parmi : une sous-trame #0, une sous-trame #1, une sous-trame #5 et une sous-trame #6, et des indices des sous-trames sont les indices des sous-trames au sein d'une trame radio, en partant du #0 ;
pour un système duplex à répartition en fréquence, FDD, la première sous-trame, la deuxième sous-trame et la troisième sous-trame sont sélectionnées parmi : une sous-trame #0, une sous-trame #4, une sous-trame #5 et une sous-trame #9, et des indices des sous-trames sont les indices des sous-trames au sein d'une trame radio, en partant du #0 ; et **caractérisé en ce que**,
en réponse au PSS émis sur une sous-trame normale, le PSS est émis sur l'ensemble des symboles de multiplexage par répartition orthogonale de la fréquence, OFDM, de la sous-trame normale, à l'exception des symboles OFDM occupés par une zone de commande de liaison descendante ;
en réponse au SSS émis sur une sous-trame normale, le SSS est émis sur l'ensemble des symboles OFDM, de la sous-trame normale, à l'exception des symboles OFDM occupés par une zone de commande de liaison descendante.

4. Système d'émission de signal de synchronisation, comprenant :
une station de base ; et
un terminal ;
dans lequel :
la station de base émet périodiquement (S104) un signal de synchronisation et un canal physique de diffusion, PBCH, vers un terminal selon un modèle de sous-trame d'émission prédéfini, dans lequel le signal de synchronisation comprend un signal de synchronisation primaire PSS et un signal de synchronisation secondaire SSS, et le modèle de sous-trame d'émission indique des positions de sous-trames d'émission du signal de synchronisation et du PBCH dans une pluralité de trames radio au sein d'une période de temps prédéterminée ; et
le terminal reçoit périodiquement et de manière répétée le signal de synchronisation et le PBCH, dans chacune de la pluralité de trames radio, le PSS est émis sur une première sous-trame, le SSS est émis sur une deuxième sous-trame et le PBCH est émis sur une troisième sous-trame, dans lequel la première sous-trame et la deuxième sous-trame ne sont pas adjacentes, et la deuxième sous-trame et la troisième sous-trame sont adjacentes ;
pour un système duplex à répartition dans le temps, TDD, la première sous-trame, la deuxième sous-trame et la troisième sous-trame sont sélectionnées parmi : une sous-trame #0, une sous-trame #1, une sous-trame #5 et une sous-trame #6, et des indices des sous-trames sont les indices des sous-trames au sein d'une trame radio, en partant du #0 ;
pour un système duplex à répartition en fréquence, FDD, la première sous-trame, la deuxième sous-trame et la troisième sous-trame sont sélectionnées parmi : une sous-trame #0, une sous-trame #4, une sous-trame #5 et une sous-trame #9, et des indices des sous-trames sont les indices des sous-trames au sein d'une trame radio, en partant du #0 ; et **caractérisé en ce que**,
en réponse au PSS émis sur une sous-trame normale, le PSS est émis sur l'ensemble des symboles de multiplexage par répartition orthogonale de la fréquence, OFDM, de la sous-trame normale, à l'exception des symboles OFDM occupés par une zone de commande de liaison descendante ;
en réponse au SSS émis sur une sous-trame normale, le SSS est émis sur l'ensemble des symboles OFDM, de la sous-trame normale, à l'exception des symboles OFDM occupés par une zone de commande de liaison descendante.
